(19) Europäisches Patentamt
European Patent Office
Office européen des brevets

(11) EP 4 461 753 A2

(12) EUROPEAN PATENT APPLICATION

(43) Date of publication:
**13.11.2024 Bulletin 2024/46**

(21) Application number: **24203285.2**

(22) Date of filing: **28.05.2021**

(51) International Patent Classification (IPC):
***C08F 4/659*** *(2006.01)*

(52) Cooperative Patent Classification (CPC):
(C-Sets available)
**C08F 210/16;** C08F 4/65912; C08F 4/65916;
Y02P 20/582 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2020 US 202063031638 P**
**29.01.2021 US 202163143324 P**

(62) Document number(s) of the earlier application(s) in accordance with Art. 76 EPC:
**21735490.1 / 4 157 899**

(71) Applicant: **Dow Global Technologies LLC**
**Midland, MI 48674 (US)**

(72) Inventors:
- **BAILLIE, Rhett A.**
  **Lake Jackson, TX 77566 (US)**
- **PEARSON, David M.**
  **Lake Jackson, TX 77566 (US)**
- **DO, Hien Q.**
  **Lake Jackson, TX 77566 (US)**
- **DELORBE, Johnathan E.**
  **Lake Jackson, TX 77566 (US)**
- **FONTAINE, Philip P.**
  **Lake Jackson, TX 77566 (US)**
- **ROSEN, Mari S.**
  **Lake Jackson, TX 77566 (US)**
- **CAMELIO, Andrew M.**
  **Midland, MI 48667 (US)**

(74) Representative: **Boult Wade Tennant LLP**
**Salisbury Square House**
**8 Salisbury Square**
**London EC4Y 8AP (GB)**

Remarks:
This application was filed on 27-09-2024 as a divisional application to the application mentioned under INID code 62.

# (54) CATALYST SYSTEMS AND PROCESSES FOR PRODUCING POLYETHYLENE USING THE SAME

(57) Embodiments of the present application are directed to procatalysts, and catalyst systems including procatalysts, including a metal-ligand complex having the structure of formula (I):

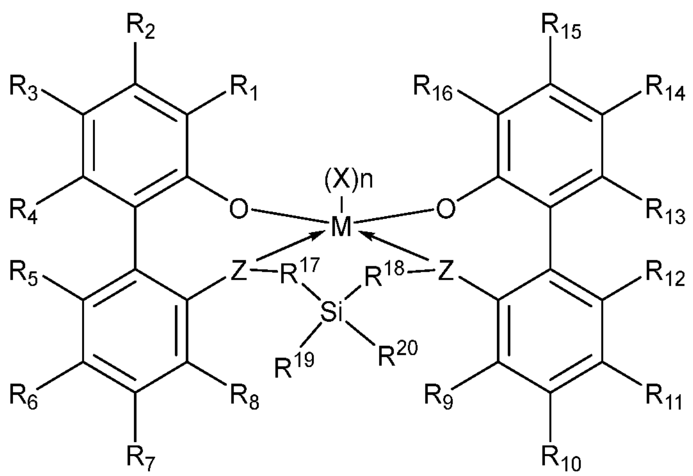

(I)

EP 4 461 753 A2

Processed by Luminess, 75001 PARIS (FR)

(Cont. next page)

(52) Cooperative Patent Classification (CPC): (Cont.)

C-Sets
**C08F 210/16, C08F 4/64193;**
**C08F 210/16, C08F 4/659;**
C08F 210/16, C08F 210/14, C08F 2500/27;
C08F 210/16, C08F 210/14, C08F 2500/27, C08F 2500/01;
C08F 210/16, C08F 210/14, C08F 2500/27, C08F 2500/01, C08F 2500/03;
C08F 210/16, C08F 210/14, C08F 2500/27, C08F 2500/03;
C08F 210/16, C08F 210/14, C08F 2500/27, C08F 2500/04

## Description

### CROSS REFERENCE TO RELATED APPLICATIONS

This application claims priority to U.S. Provisional Patent Application No. 63/031,638 filed May 29, 2020 and U.S. Provisional Patent Application No. 63/143,324 filed January 29, 2021, each of which is incorporated by reference in its entirety.

### TECHNICAL FIELD

Embodiments of the present disclosure are generally directed to processes for producing polyethylene and, in particular, contacting ethylene and, optionally, one or more $(C_3-C_{12})\alpha$-olefin comonomers with silyl-bridged bis-phenylphenoxy catalyst systems in a gas-phase polymerization reactor.

### BACKGROUND

Since the discovery of Ziegler and Natta on heterogeneous olefin polymerizations, global polyolefin production reached approximately 150 million tons per year in 2015, and continues to increase due to market demand. The catalyst systems in the polyolefin polymerization process may contribute to the characteristics and properties of such polyolefins. For example, catalyst systems that include bis-phenylphenoxy (BPP) metal-ligand complexes may produce polyolefins that have flat or reverse short-chain branching distributions (SCBD), relatively high levels of comonomer incorporation, high native molecular weights, and/or narrow-medium molecular weight distributions (MWD).

However, when utilized in some polymerization processes, such as gas-phase polymerization, catalyst systems that include BPP metal-ligand complexes may exhibit generally poor productivity. That is, catalyst systems that include BPP metal-ligand complexes may generally produce less polymer relative to the amount of the catalyst system used. Therefore, the use of catalyst systems that include BPP metal-ligand complexes may not be commercially viable in gas-phase polymerization processes.

### SUMMARY

Accordingly, ongoing needs exist for catalyst systems that are suitable for use in gas-phase reactors and have improved productivity when utilized in gas-phase polymerization processes. Embodiments of the present disclosure address these needs by providing catalyst systems including BPP metal-ligand complexes having silicon-containing bridges. The catalyst systems, when utilized in gas-phase polymerization processes, exhibit a greatly increased productivity when compared to similar catalyst systems including BPP metal-ligand complexes without silicon-containing bridges.

Embodiments of the present disclosure include a procatalyst. The procatalyst includes a metal-ligand complex disposed on one or more support materials. The metal-ligand complex has a structure according to formula (I):

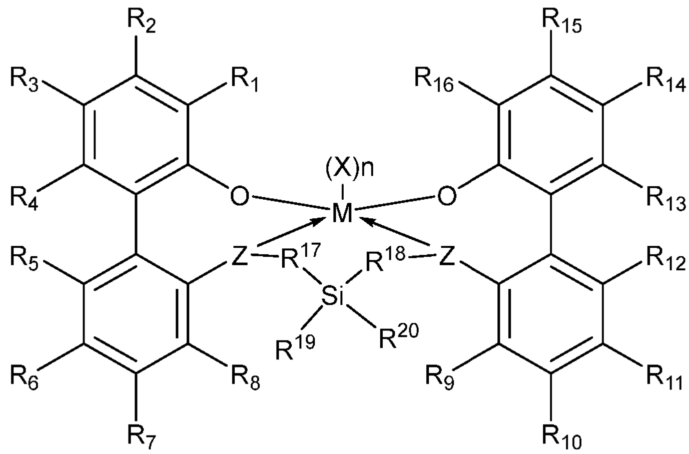

(I)

In formula (I), M is titanium, zirconium, or hafnium; subscript n of $(X)_n$ is 1, 2, or 3; each X is a monodentate ligand independently chosen from unsaturated $(C_2-C_{50})$hydrocarbon, unsaturated $(C_2-C_{50})$heterohydrocarbon, $(C_1-C_{50})$hydrocarbyl, $(C_1-C_{50})$heterohydrocarbyl, $(C_6-C_{50})$aryl, $(C_4-C_{50})$heteroaryl, halogen, $-N(R^N)_2$, and $-N(R^N)COR^C$;

and the metal-ligand complex of formula (I) is overall charge-neutral.

In formula (I), each Z is independently chosen from -O-, -S-, $(C_6\text{-}C_{50})$aryl, $(C_4\text{-}C_{50})$heteroaryl, $N(C_1\text{-}C_{40})$hydrocarbyl, and $P(C_1\text{-}C_{40})$hydrocarbyl.

In formula (I), $R^1$ and $R^{16}$ are independently chosen from $(C_6\text{-}C_{50})$aryl, $(C_4\text{-}C_{50})$heteroaryl, $(C_1\text{-}C_{40})$alkyl, $(C_3\text{-}C_{40})$heteroalkyl, radicals having formula (II), radicals having formula (III), and radicals having formula (IV):

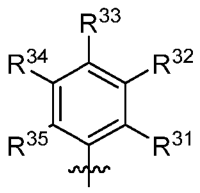 (II) 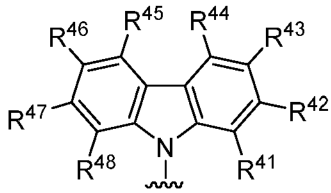 (III) 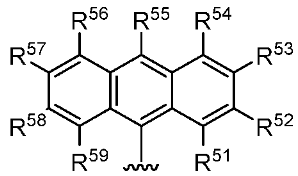 (IV)

In formulas (II), (III), and (IV), $R^{31-35}$, $R^{41-48}$, and $R^{51-59}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R^N)$-, $(R^C)_2NC(O)$-, or halogen.

In formula (I), $R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R)$-, $(R^C)_2NC(O)$-, and halogen.

In formula (I), $R^{17}$ and $R^{18}$ are independently chosen from $-(CR^C_2)_m-$, wherein subscript m is from 1 to 10.

In formula (I), $R^{19}$ and $R^{20}$ are independently chosen from linear or branched $(C_1\text{-}C_{20})$alkyl.

In formulas (I), (II), (III), and (IV), each $R^C$, $R^P$, and $R^N$ are independently chosen from -H, $(C_1\text{-}C_{50})$hydrocarbyl, and $(C_1\text{-}C_{50})$heterohydrocarbyl.

Embodiments of the present disclosure include methods for producing a catalyst system. The method includes contacting one or more support materials, one or more activators, and a metal-ligand complex in an inert hydrocarbon solvent to produce the catalyst system.

Embodiments of the present disclosure include a process for producing polyethylene. The process includes contacting ethylene and, optionally, one or more $(C_3\text{-}C_{12})\alpha$-olefin comonomers with a catalyst system in a gas-phase polymerization reactor. The catalyst system comprises a metal-ligand complex disposed on one or more support materials.

These and additional features provided by the embodiments of the present disclosure will be more fully understood in view of the following detailed description.

## DETAILED DESCRIPTION

Specific embodiments of procatalysts, catalyst systems, methods of producing catalyst systems, and processes for producing polyethylene will now be described. However, it should be understood that the systems, methods, and processes of the present disclosure may be embodied in different forms, and should not be construed as limited to the specific embodiments set forth in the present disclosure. Rather, embodiments are provided so that the present disclosure will be thorough and complete, and will fully convey the scope of the disclosed subject matter to those skilled in the art.

Common abbreviations used in the present disclosure are listed below:

**Me:** methyl; **Et:** ethyl; **Ph:** phenyl; **Bn:** benzyl; ***i*-Pr:** *iso*-propyl; ***t*-Bu:** *tert*-butyl; *t*-**Oct:** *tert-octyl* (2,4,4-trimethylpentan-2-yl); **Tf:** trifluoromethane sulfonate; **THF:** tetrahydrofuran; **$Et_2O$:** diethyl ether; **$CH_2Cl_2$:** dichloromethane; **CV:** column volume (used in column chromatography); **EtOAc:** ethyl acetate; **$C_6D_6$:** deuterated benzene or benzene-*d*6; **$CDCl_3$:** deuterated chloroform; **$Na_2SO_4$:** sodium sulfate; **$MgSO_4$:** magnesium sulfate; **HCl:** hydrogen chloride; ***n*-BuLi:** butyllithium; ***t*-BuLi:** *tert*-butyllithium; **MAO:** methylaluminoxane; **MMAO:** modified methylaluminoxane; **GC:** gas chromatography; **LC:** liquid chromatography; **NMR:** nuclear magnetic resonance; **MS:** mass spectrometry; **mmol:** millimoles; **mL:** milliliters; **M:** molar; **min or mins:** minutes; **h** or **hrs:** hours; **d:** days.

The terms "halogen atom" or "halogen" mean the radical of a fluorine atom (F), chlorine atom (Cl), bromine atom (Br), or iodine atom (I). The term "halide" means the anionic form of the halogen atom: fluoride ($F^-$), chloride ($Cl^-$), bromide ($Br^-$), or iodide ($I^-$).

The term "independently selected" means that the R groups, such as, $R^1$, $R^2$, and $R^3$, can be identical or different (*e.g.*, $R^1$, $R^2$, and $R^3$ may all be substituted alkyls; or $R^1$ and $R^2$ may be a substituted alkyl, and $R^3$ may be an aryl). A chemical name associated with an R group is intended to convey the chemical structure that is recognized in the art as corresponding to that of the chemical name. As a result, chemical names are intended to supplement and illustrate, not preclude, the structural definitions known to those of skill in the art.

The term "procatalyst" means a compound that has catalytic activity when combined with an activator. The

term "activator" means a compound that chemically reacts with a procatalyst in a manner that converts the procatalyst to a catalytically active compound. As used in the present disclosure, the terms "co-catalyst" and "activator" are interchangeable, and have identical meanings unless clearly specified.

The term "substitution" means that at least one hydrogen atom (-H) bonded to a carbon atom of a corresponding unsubstituted compound or functional group is replaced by a substituent (*e.g.,* $R^S$). The term "-H" means a hydrogen or hydrogen radical that is covalently bonded to another atom. As used in the present disclosure, the terms "hydrogen" and "-H" are interchangeable, and have identical meanings unless clearly specified.

When used to describe certain carbon atom-containing chemical groups, a parenthetical expression having the form "($C_x$-$C_y$)" means that the unsubstituted form of the chemical group has from x carbon atoms to y carbon atoms, inclusive of x and y. For example, a ($C_1$-$C_{50}$)alkyl is an alkyl group having from 1 to 50 carbon atoms in its unsubstituted form. In some embodiments and general structures, certain chemical groups may be substituted by one or more substituents such as $R^S$. An $R^S$ substituted chemical group defined using the "($C_x$-$C_y$)" parenthetical may contain more than y carbon atoms depending on the identity of any groups $R^S$. For example, a "($C_1$-$C_{50}$)alkyl substituted with exactly one group $R^S$, where $R^S$ is phenyl (-$C_6H_5$)" may contain from 7 to 56 carbon atoms. As a result, when a chemical group defined using the "($C_x$-$C_y$)" parenthetical is substituted by one or more carbon atom-containing substituents $R^S$, the minimum and maximum total number of carbon atoms of the chemical group is determined by adding to both x and y the combined sum of the number of carbon atoms from all of the carbon atom-containing substituents $R^S$.

The term "($C_1$-$C_{50}$)hydrocarbyl" means a hydrocarbon radical of from 1 to 50 carbon atoms and the term "($C_1$-$C_{50}$)hydrocarbylene" means a hydrocarbon diradical of from 1 to 50 carbon atoms, in which each hydrocarbon radical and each hydrocarbon diradical is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$ or unsubstituted. As used in the present disclosure, a ($C_1$-$C_{50}$)hydrocarbyl may be an unsubstituted or substituted ($C_1$-$C_{50}$)alkyl, ($C_3$-$C_{50}$)cycloalkyl, ($C_3$-$C_{25}$)cycloalkyl-($C_1$-$C_{25}$)alkylene, ($C_6$-$C_{50}$)aryl, or ($C_6$-$C_{25}$)aryl-($C_1$-$C_{25}$)alkylene (such as benzyl (-$CH_2$-$C_6H_5$)).

The term "($C_1$-$C_{50}$)alkyl" means a saturated straight or branched hydrocarbon radical containing from 1 to 50 carbon atoms. Each ($C_1$-$C_{50}$)alkyl may be unsubstituted or substituted by one or more $R^S$. In embodiments, each hydrogen atom in a hydrocarbon radical may be substituted with $R^S$, such as, for example, trifluoromethyl. Examples of unsubstituted ($C_1$-$C_{50}$)alkyl are unsubstituted ($C_1$-$C_{20}$)alkyl; unsubstituted ($C_1$-$C_{10}$)alkyl; unsubstituted ($C_1$-$C_5$)alkyl; methyl; ethyl; 1-propyl; 2-propyl; 1-butyl; 2-butyl; 2-methylpropyl; 1,1-dimethylethyl; 1-pentyl; 1-hexyl; 1-heptyl; 1-nonyl; and 1-decyl. Examples of substituted ($C_1$-$C_{50}$)alkyl are substituted ($C_1$-$C_0$)alkyl, substituted ($C_1$-$C_{10}$)alkyl, trifluoromethyl, and [$C_{45}$]alkyl. The term "[$C_{45}$]alkyl" means there is a maximum of 45 carbon atoms in the radical, including substituents, and is, for example, a ($C_{27}$-$C_{40}$)alkyl substituted by one $R^S$, which is a ($C_1$-$C_5$)alkyl, such as, for example, methyl, trifluoromethyl, ethyl, 1-propyl, 1-methylethyl, or 1,1-dimethylethyl.

The term "($C_3$-$C_{50}$)cycloalkyl" means a saturated cyclic hydrocarbon radical of from 3 to 50 carbon atoms that is unsubstituted or substituted by one or more $R^S$. Other cycloalkyl groups (e.g., ($C_x$-$C_y$)cycloalkyl) are defined in an analogous manner as having from x to y carbon atoms and being either unsubstituted or substituted with one or more $R^S$. Examples of unsubstituted ($C_3$-$C_{50}$)cycloalkyl are unsubstituted ($C_3$-$C_{20}$)cycloalkyl, unsubstituted ($C_3$-$C_{10}$)cycloalkyl, cyclopropyl, cyclobutyl, cyclopentyl, cyclohexyl, cycloheptyl, cyclooctyl, cyclononyl, and cyclodecyl. Examples of substituted ($C_3$-$C_{50}$)cycloalkyl are substituted ($C_3$-$C_{20}$)cycloalkyl, substituted ($C_3$-$C_{10}$)cycloalkyl, and 1-fluorocyclohexyl.

The term "($C_6$-$C_{50}$)aryl" means an unsubstituted or substituted (by one or more $R^S$) mono-, bi- or tricyclic aromatic hydrocarbon radical of from 6 to 50 carbon atoms, of which at least from 6 to 14 of the carbon atoms are aromatic ring carbon atoms. A monocyclic aromatic hydrocarbon radical includes one aromatic ring; a bicyclic aromatic hydrocarbon radical has two rings; and a tricyclic aromatic hydrocarbon radical has three rings. When the bicyclic or tricyclyc aromatic hydrocarbon radical is present, at least one of the rings of the radical is aromatic. The other ring or rings of the aromatic radical may be independently fused or non-fused and aromatic or non-aromatic. Examples of unsubstituted ($C_6$-$C_{50}$)aryl include: unsubstituted (($C_6$-$C_{20}$)aryl, unsubstituted ($C_6$-$C_{18}$)aryl; 2-($C_1$-$C_5$)alkyl-phenyl; phenyl; fluorenyl; tetrahydrofluorenyl; indacenyl; hexahydroindacenyl; indenyl; dihydroindenyl; naphthyl, tetrahydronaphthyl; and phenanthrene. Examples of substituted ($C_6$-$C_{50}$)aryl include: substituted ($C_1$-$C_{20}$)aryl; substituted ($C_6$-$C_{18}$)aryl; 2,4-bis([$C_{20}$]alkyl)-phenyl; polyfluorophenyl; pentafluorophenyl; and fluoren-9-one-l-yl.

The term "heteroatom," refers to an atom other than hydrogen or carbon. Examples of groups containing one or more than one heteroatom include O, S, S(O), $S(O)_2$, $Si(R^C)_2$, $P(R^P)$, $N(R^N)$, $-N=C(R^C)_2$, $-Ge(R^C)_2$-, or $-Si(R^C)$-, where each $R^C$ and each $R^P$ is unsubstituted ($C_1$-$C_{18}$)hydrocarbyl or -H, and where each $R^N$ is unsubstituted ($C_1$-$C_{18}$)hydrocarbyl. The term "heterohydrocarbon'' refers to a molecule or molecular framework in which one or more carbon atoms of a hydrocarbon are replaced with a heteroatom. The term "($C_1$~$C_{50}$)heterohydrocarbyl" means a heterohydrocarbon radical of from 1 to 50 carbon atoms, and the term "($C_1$-$C_{50}$)heterohydrocarbylene" means a heterohydrocarbon diradical of from 1 to 50 carbon atoms. The hetero hydrocarbon of the ($C_1$-$C_{50}$)heterohydrocarbyl or the ($C_1$~$C_{50}$)heterohydrocarbylene has one or more heteroatoms. The radical of the heterohydrocarbyl may be on a carbon atom or a heteroatom. The two radicals of the heterohydrocarbylene may be on a single carbon atom or on a single heteroatom. Additionally,

one of the two radicals of the diradical may be on a carbon atom and the other radical may be on a different carbon atom; one of the two radicals may be on a carbon atom and the other on a heteroatom; or one of the two radicals may be on a heteroatom and the ofther radical on a different heteroatom. Each ($C_1$-$C_{50}$)heterohydrocarbyl and ($C_1$-$C_{50}$)heterohydrocarbylene may be unsubstituted or substituted (by one or more $R^S$), aromatic or non-aromatic, saturated or unsaturated, straight chain or branched chain, cyclic (including mono- and poly-cyclic, fused and non-fused polycyclic), or acyclic.

The term "($C_4$-$C_{50}$)heteroaryl" means an unsubstituted or substituted (by one or more $R^S$) mono-, bi-, or tricyclic heteroaromatic hydrocarbon radical of from 4 to 50 total carbon atoms and from 1 to 10 heteroatoms. A monocyclic heteroaromatic hydrocarbon radical includes one heteroaromatic ring; a bicyclic heteroaromatic hydrocarbon radical has two rings; and a tricyclic heteroaromatic hydrocarbon radical has three rings. When the bicyclic or tricyclyc heteroaromatic hydrocarbon radical is present, at least one of the rings in the radical is heteroaromatic. The other ring or rings of the heteroaromatic radical may be independently fused or non-fused and aromatic or non-aromatic. Other heteroaryl groups (e.g., ($C_x$-$C_y$)heteroaryl generally, such as ($C_4$-$C_{12}$)heteroaryl) are defined in an analogous manner as having from x to y carbon atoms (such as 4 to 12 carbon atoms) and being unsubstituted or substituted by one or more than one $R^S$. The monocyclic heteroaromatic hydrocarbon radical is a 5-membered ring or a 6-membered ring. The 5-membered ring has 5 minus h carbon atoms, wherein 1a is the number of heteroatoms and may be 1, 2, or 3; and each heteroatom may be O, S, N, or P. Examples of 5-membered ring heteroaromatic hydrocarbon radicals include pyrrol-1-yl; pyrrol-2-yl; furan-3-yl; thiophen-2-yl; pyrazol-1-yl; isoxazol-2-yl; isothiazol-5-yl; imidazol-2-yl; oxazol-4-yl; thiazol-2-yl; 1,2,4-triazol-1-yl; 1,3,4-oxadiazol-2-yl; 1,3,4-thiadiazol-2-yl; tetrazol-1-yl; tetrazol-2-yl; and tetrazol-5-yl. The 6-membered ring has 6 minus h carbon atoms, wherein h is the number of heteroatoms and may be 1 or 2 and the heteroatoms may be N or P. Examples of 6-membered ring heteroaromatic hydrocarbon radicals include pyridine-2-yl; pyrimidin-2-yl; and pyrazin-2-yl. The bicyclic heteroaromatic hydrocarbon radical can be a fused 5,6- or 6,6-ring system. Examples of the fused 5.6-ring system bicyclic heteroaromatic hydrocarbon radical are indol-1-yl; and benzimidazole-1-yl. Examples of the fused 6,6-ring system bicyclic heteroaromatic hydrocarbon radical are quinolin-2-yl; and isoquinolin-1-yl. The tricyclic heteroaromatic hydrocarbon radical can be a fused 5,6,5-; 5,6,6-; 6,5,6-; or 6,6,6-ring system. An example of the fused 5,6,5-ring system is 1,7-dihydropyrrolo[3,2-f]indol-1-yl. An example of the fused 5,6,6-ring system is 1H-benzo[f] indol-1-yl. An example of the fused 6,5,6-ring system is 9H-carbazol-9-yl. An example of the fused 6,5,6-ring system is 9H-carbazol-9-yl. An example of the fused 6,6,6-ring system is acrydin-9-yl.

The term "polymer" refers to polymeric compounds prepared by polymerizing monomers, whether of the same or a different type. The generic term polymer thus includes homopolymers, which are polymers prepared by polymerizing only one monomer, and copolymers, which are polymers prepared by polymerizing two or more different monomers.

The term "interpolymer" refers to polymers prepared by polymerizing at least two different types of monomers. The generic term interpolymer thus includes copolymers and other polymers prepared by polymerizing more than two different monomers, such as terpolymers.

The terms "polyolefin," "polyolefin polymer," and "polyolefin resin" refer to polymers prepared by polymerizing a simple olefin (also referred to as an alkene, which has the general formula $C_nH_{2n}$) monomer. The generic term polyolefin thus includes polymers prepared by polymerizing ethylene monomer with or without one or more comonomers, such as polyethylene, and polymers prepared by polymerizing propylene monomer with or without one or more comonomers, such as polypropylene.

The terms "polyethylene" and "ethylene-based polymer" refer to polyolefins comprising greater than 50 percent (%) by mole of units that have been derived from ethylene monomer, which includes polyethylene homopolymers and copolymers. Common forms of polyethylene known in the art include Low Density Polyethylene (LDPE), Linear Low Density Polyethylene (LLDPE), Ultra Low Density Polyethylene (ULDPE), Very Low Density Polyethylene (VLDPE), Medium Density Polyethylene (MDPE), and High Density Polyethylene (HDPE).

The term "molecular weight distribution" means a ratio of two different molecular weights of a polymer. The generic term molecular weight distribution includes a ratio of a weight average molecular weight ($M_w$) of a polymer to a number average molecular weight ($M_n$) of the polymer, which may also be referred to as a "molecular weight distribution ($M_w/M_n$)," and a ratio of a z-average molecular weight ($M_z$) of a polymer to a weight average molecular weight ($M_w$) of the polymer, which may also be referred to as a "molecular weight distribution ($M_z/M_w$)."

The term "composition" means a mixture of materials that comprises the composition, as well as reaction products and decomposition products formed from the materials of the composition.

The terms "comprising," "including," "having," and their derivatives, are not intended to exclude the presence of any additional component, step, or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed.

In embodiments, the catalyst system includes a procatalyst. The procatalyst includes a metal-ligand complex. The metal-ligand complex may have a structure according to formula (I):

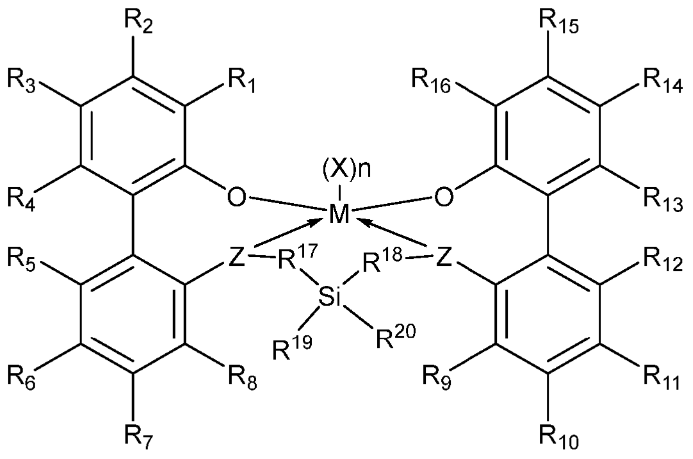

(I)

In formula (I), M is titanium (Ti), zirconium (Zr), or hafnium (Hf). In embodiments, M is titanium, zirconium, or hafnium, each independently being in a formal oxidation state of +2, +3, or +4.

In formula (I), subscript n of $(X)_n$ is 1, 2, or 3, and each X is a monodentate ligand independently chosen from unsaturated ($C_2$-$C_{50}$)hydrocarbon, unsaturated ($C_2$-$C_{50}$)heterohydrocarbon, ($C_1$-$C_{50}$)hydrocarbyl, (Ci-$C_{5o}$)heterohydrocarbyl, ($C_6$-$C_{50}$)aryl, ($C_4$-$C_{50}$)heteroaryl, halogen, -$N(R^N)_2$, and -$N(R^N)COR^C$. In embodiments, each X is independently chosen from methyl; ethyl; 1-propyl; 2-propyl; 1-butyl; 2,2,-dimethylpropyl; trimethylsilylmethyl; phenyl; benzyl; or chloro. In some embodiments, subscript n of $(X)_n$ is 2 and each X is the same. In other embodiments, at least two X are different. For example, subscript n of $(X)_n$ may be 2 and each X may be a different one of methyl; ethyl; 1-propyl; 2-propyl; 1-butyl; 2,2,-dimethylpropyl; trimethylsilylmethyl; phenyl; benzyl; and chloro. In embodiments, subscript n of $(X)_n$ is 1 or 2 and at least two X independently are monoanionic monodentate ligands and a third X, if present, is a neutral monodentate ligand. In or more embodiments, subscript n of $(X)_n$ is 2.

In formula (I), the metal-ligand complex is overall charge-neutral.

In formula (I), each Z is independently chosen from -O-, -S-, ($C_6$-$C_{50}$)aryl, ($C_4$-$C_{50}$)heteroaryl, N($C_1$-$C_{50}$)hydrocarbyl, and P($C_1$-$C_{50}$)hydrocarbyl. In embodiments, each Z is the same. For example, each Z may be -O-.

In formula (I), $R^1$ and $R^{16}$ are independently chosen from ($C_6$-$C_{50}$)aryl, ($C_4$-$C_{50}$)heteroaryl, ($C_1$-$C_{50}$)alkyl, ($C_3$-$C_{40}$)heteroalkyl, radicals having formula (II), radicals having formula (III), and radicals having formula (IV):

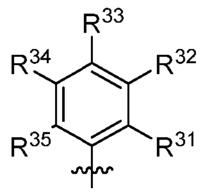 (II) 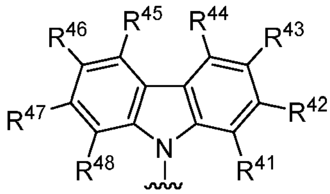 (III) 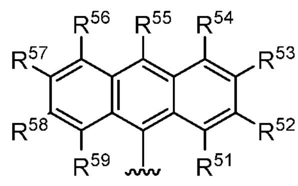 (IV)

In formula (II), $R^{31}$, $R^{32}$, $R^{33}$, $R^{34}$, $R^{35}$ are independently chosen from -H, ($C_1$-$C_{50}$)hydrocarbyl, ($C_1$-$C_{50}$)heterohydrocarbyl, -$Si(R^C)_3$, -$Ge(R^C)_3$, -$P(R^P)_2$, -$N(R^N)_2$, -$OR^C$, -$SR^C$, -$NO_2$, -CN, -$CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, or halogen.

In formula (III), $R^{41}$, $R^{42}$, $R^{43}$, $R^{44}$, $R^{45}$, $R^{46}$, $R^{47}$, $R^{48}$ are independently chosen from - H, ($C_1$-$C_{50}$)hydrocarbyl, ($C_1$-$C_{50}$)heterohydrocarbyl, -$Si(R^C)_3$, -$Ge(R^C)_3$, -$P(R^P)_2$, -$N(R^N)_2$, -$OR^C$, -$SR^C$, -$NO_2$, -CN, -$CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, or halogen.

In formula (IV), $R^{51}$, $R^{52}$, $R^{53}$, $R^{54}$, $R^{55}$, $R^{56}$, $R^{57}$, $R^{58}$, and $R^{59}$ are independently chosen from -H, ($C_1$-$C_{50}$)hydrocarbyl, (Ci-$C_{5o}$)heterohydrocarbyl, -$Si(R^C)_3$, -$Ge(R^C)_3$, -$P(R^P)_2$, -$N(R^N)_2$, -$OR^C$, -$SR^C$, -$NO_2$, -CN, -$CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, or halogen.

The groups $R^1$ and $R^{16}$ in the metal-ligand complex of formula (I) are chosen independently of one another. For example, $R^1$ may be chosen from a radical having formula (II), (III), or (IV), and $R^{16}$ may be a ($C_4$-$C_{50}$)heteroaryl; or $R^1$ may be chosen from a radical having formula (II), (III), or (IV), and $R^{16}$ may be chosen from a radical having formula (II), (III), or (IV), the same as or different from that of $R^1$. In embodiments, both $R^1$ and $R^{16}$ are radicals having formula (II), for which the groups $R^{31-35}$ are the same or different in $R^1$ and $R^{16}$. In some embodiments, both $R^1$ and $R^{16}$ are

radicals having formula (III), for which the groups $R^{41-48}$ are the same or different in $R^1$ and $R^{16}$. In other embodiments, both $R^1$ and $R^{16}$ are radicals having formula (IV), for which the groups $R^{51-59}$ are the same or different in $R^1$ and $R^{16}$.

In embodiments, at least one of $R^1$ and $R^{16}$ is a radical having formula (II), where at least one of $R^{32}$ and $R^{34}$ are *tert*-butyl. In some embodiments, when at least one of $R^1$ or $R^{16}$ is a radical having formula (III), one of or both of $R^{43}$ and $R^{46}$ is *tert*-butyl and $R^{41-42}$, $R^{44-45}$, and $R^{47-48}$ are -H. In other embodiments, one of or both of $R^{42}$ and $R^{47}$ is *tert*-butyl and $R^{41}$, $R^{43-46}$, and $R^{48}$ are -H. In some embodiments, both $R^{42}$ and $R^{47}$ are -H. In some embodiments, $R^{41-48}$ are -H.

In formula (I), $R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1-C_{50})$hydrocarbyl, (Ci-$C_{50}$)heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^c)_2C=N-$, $R^CC(O)O-$, $R^COC(O)-$, $R^CC(O)N(R)-$, $(R^c)_2NC(O)-$, and halogen.

In some embodiments, at least one of $R^5$, $R^6$, $R^7$, and $R^8$ is a halogen atom; and at least one of $R^9$, $R^{10}$, $R^{11}$, and $R^{12}$ is a halogen atom. In some embodiments, at least two of $R^5$, $R^6$, $R^7$, and $R^8$ are halogen atoms; and at least two of $R^9$, $R^{10}$, $R^{11}$, and $R^{12}$ are halogen atoms. In various embodiments, at least three of $R^5$, $R^6$, $R^7$, and $R^8$ are halogen atoms; and at least three of $R^9$, $R^{10}$, $R^{11}$, and $R^{12}$ are halogen atoms.

In embodiments, $R^3$ and $R^{14}$ are $(C_1-C_{24})$alkyl. In various embodiments, $R^3$ and $R^{14}$ are $(C_1-C_{20})$alkyl. In some embodiments, $R^3$ and $R^{14}$ are $(C_4-C_{24})$alkyl. In one or more embodiments, $R^3$ and $R^{14}$ are $(C_8-C_{12})$alkyl. In some embodiments, $R^3$ and $R^{14}$ are 1-propyl, 2-propyl (also called *iso*-propyl), 1,1-dimethylethyl (also called *tert*-butyl), cyclopentyl, cyclohexyl, 1-butyl, pentyl, 3-methyl-1-butyl, hexyl, 4-methyl-1-pentyl, heptyl, *n*-octyl, *tert*-octyl (also called 2,4,4-trimethylpentan-2-yl), nonyl, and decyl. In embodiments, $R^3$ and $R^{14}$ are $-OR^C$, wherein $R^C$ is $(C_1-C_{20})$hydrocarbon, and in some embodiments, $R^C$ is methyl, ethyl, 1-propyl, 2-propyl (also called *iso*-propyl), or 1,1-dimethylethyl.

In embodiments, $R^3$ and $R^{14}$ are methyl. In other embodiments, $R^3$ and $R^{14}$ are $(C_4-C_{24})$alkyl. In some embodiments, $R^8$ and $R^9$ are 1-propyl, 2-propyl (also called *iso*-propyl), 1,1-dimethylethyl (also called *tert*-butyl), cyclopentyl, cyclohexyl, 1-butyl, pentyl, 3-methyl-1-butyl, hexyl, 4-methyl-1-pentyl, heptyl, *n*-octyl, *tert*-octyl (also called 2,4,4-trimethylpentan-2-yl), nonyl, and decyl.

In some embodiments, $R^6$ and $R^{11}$ are halogen. In other embodiments, $R^6$ and $R^{11}$ are $(C_1-C_{24})$alkyl. In some embodiments, $R^6$ and $R^{11}$ independently are chosen from methyl, ethyl, 1-propyl, 2-propyl (also called *iso*-propyl), 1,1-dimethylethyl (also called *tert*-butyl), cyclopentyl, cyclohexyl, 1-butyl, pentyl, 3-methylbutyl, hexyl, 4-methylpentyl, heptyl, *n*-octyl, *tert*-octyl (also called 2,4,4-trimethylpentan-2-yl), nonyl, and decyl. In some embodiments, $R^6$ and $R^{11}$ are *tert*-butyl. In embodiments, $R^6$ and $R^{11}$ are $-OR^C$, wherein $R^C$ is $(C_1-C_{20})$hydrocarbyl, and in some embodiments, $R^C$ is methyl, ethyl, 1-propyl, 2-propyl (also called *iso*-propyl), or 1,1-dimethylethyl. In other embodiments, $R^6$ and $R^{11}$ are $-SiR^C_3$, wherein each $R^C$ is independently $(C_1-C_{20})$hydrocarbyl, and in some embodiments, $R^C$ is methyl, ethyl, 1-propyl, 2-propyl (also called *iso*-propyl), or 1,1-dimethylethyl.

In some embodiments, $R^3$ and $R^{14}$ are methyl and $R^6$ and $R^{11}$ are halogen. In other embodiments, $R^6$ and $R^{11}$ are *tert*-butyl. In other embodiments, $R^3$ and $R^{14}$ are *tert-octyl* or *n*-octyl.

In formula (I), $R^{17}$ and $R^{18}$ are independently chosen from $-(CR^C_2)_m-$, wherein subscript m is from 1 to 10. In one or more embodiments, each subscript m is 1 or 2.

In formula (I), $R^{19}$ and $R^{20}$ are independently chosen from linear or branched $(C_1-C_{20})$alkyl. In some embodiments, $R^{19}$ and $R^{20}$ are independently chosen from linear or branched $(C_2-C_{20})$alkyl or $(C_3-C_7)$alkyl.

In formulas (I), (II), (III), and (IV), each $R^C$, $R^P$, and $R^N$ are independently chosen from -H, $(C_1-C_{50})$hydrocarbyl, and $(C_1-C_{50})$heterohydrocarbyl.

In embodiments, the procatalyst may be rendered catalytically active by contacting it to, or combining it with, an activator. A procatalyst that has been rendered catalytically active by contacting it to, or combining it with, an activator may be referred to as a "catalyst system." That is, as used in the present disclosure, a catalyst system may include a procatalyst and one or more activators. The term "activator" may include any combination of reagents that increases the rate at which a transition metal compound oligomerizes or polymerizes unsaturated monomers, such as olefins. An activator may also affect the molecular weight, degree of branching, comonomer content, or other properties of the oligomer or polymer. The transition metal compounds may be activated for oligomerization and/or polymerization catalysis in any manner sufficient to allow coordination or cationic oligomerization and or polymerization.

Alumoxane activators may be utilized as an activator for one or more of the catalyst compositions. Alumoxane(s) or aluminoxane(s) are generally oligomeric compounds containing --Al(R)--O-- subunits, where R is an alkyl group. Examples of alumoxanes include methylalumoxane (MAO), modified methylalumoxane (MMAO), ethylalumoxane and isobutylalumoxane. Alkylalumoxanes and modified alkylalumoxanes are suitable as catalyst activators, particularly when the abstractable ligand is a halide. Mixtures of different alumoxanes and modified alumoxanes may also be used. For further descriptions, see U.S. Patent Nos. 4,665,208; 4,952,540; 5,041,584; 5,091,352; 5,206,199; 5,204,419; 4,874,734; 4,924,018; 4,908,463; 4,968,827; 5,329,032; 5,248,801; 5,235,081; 5,157,137; 5,103,031; and EP 0 561 476; EP 0 279 586; EP 0 516 476; EP 0 594 218; and WO 94/10180.

When the activator is an alumoxane (modified or unmodified), the maximum amount of activator may be selected to be a 5000-fold molar excess Al/M over the catalyst precursor (per metal catalytic site). Alternatively, or additionally

the minimum amount of activator-to-catalyst-precursor may be set at a 1:1 molar ratio.

Aluminum alkyl or organoaluminum compounds that may be utilized as activators (or scavengers) include trimethylaluminum, triethylaluminum, triisobutylaluminum, tri-n-hexylaluminum, tri-n-octylaluminum and the like.

When the metal-ligand complex is rendered catalytically active by an activator, the metal of the metal-ligand complex may have a formal charge of positive one (+1). In embodiments in which the procatalyst includes the metal-ligand complex, the metal-ligand complex has a structure according to formula (I) and is overall charge neutral. In embodiments in which the catalyst system includes the metal-ligand complex, the metal-ligand complex may have a structure according to formula (Ia) and has an overall formal charge of positive one (+1):

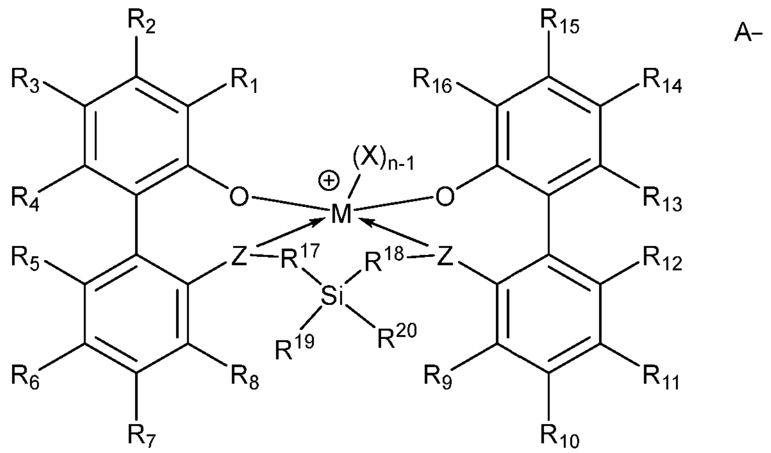

(Ia)

In formula (Ia), $A^-$ is an anion, and M, subscript n of $(X)_n$, each X, each Z, $R^1$-$R^{16}$, and $R^{17-20}$ are as described previously with regard to the metal-ligand complex of formula (I).

Formula (Ia) is a illustrative depiction of an active catalyst.

In embodiments, the metal-ligand complex, the activator, or both, may be disposed on one or more support materials. For example, the metal-ligand complex may be deposited on, contacted with, vaporized with, bonded to, or incorporated within, adsorbed or absorbed in, or on, one or more support materials. The metal-ligand complex the activator, or both, may be combined with one or more support materials using one of the support methods well known in the art or as described below. As used in the present disclosure, the metal-ligand complex the activator, or both, may be in a supported form, for example, when deposited on, contacted with, or incorporated within, adsorbed or absorbed in, or on, one or more support materials.

Suitable support materials, such as inorganic oxides, include oxides of metals of Group 2, 3, 4, 5, 13 or 14 of the IUPAC periodic table. In embodiments, support materials include silica, which may or may not be dehydrated, fumed silica, alumina (e.g., as described in International Patent Application No. 1999/060033), silica-alumina, and mixtures of these. The fumed silica may be hydrophilic (untreated), alternatively hydrophobic (treated). In embodiments, the support material is hydrophobic fumed silica, which may be prepared by treating an untreated fumed silica with a treating agent, such as dimethyldichlorosilane, a polydimethylsiloxane fluid, or hexamethyldisilazane. In some embodiments, support materials include magnesia, titania, zirconia, magnesium chloride (*e.g.,* as described in U.S. Patent No. 5,965,477), montmorillonite (*e.g.,* as described in European Patent No. 0 511 665), phyllosilicate, zeolites, talc, clays (*e.g.,* as described in U.S. Patent No. 6,034,187), and mixtures of these. In other embodiments, combinations of these support materials may be used, such as, for example, silica-chromium, silica-alumina, silica-titania, and combinations of these. Additional support materials may also include those porous acrylic polymers described in European Patent No. 0 767 184. Other support materials may also include nanocomposites described in International Patent Application No. 1999/047598; aerogels described in International Patent Application No. 1999/048605; spherulites described in U.S. Patent No. 5,972,510; and polymeric beads described in International Patent Application No. 1999/050311.

In embodiments, the support material has a surface area of from 10 square meters per gram ($m^2/g$) to 700 $m^2/g$, a pore volume of from 0.1 cubic meters per gram ($cm^3/g$) to 4.0 $cm^3/g$, and an average particle size of from 5 microns ($\mu m$) to 500 $\mu m$. In some embodiments, the support material has a surface area of from 50 $m^2/g$ to 500 $m^2/g$, a pore volume of from 0.5 $cm^3/g$ to 3.5 $cm^3/g$, and an average particle size of from 10 $\mu m$ to 200 $\mu m$. In other embodiments, the support material may have a surface area of from 100 $m^2/g$ to 400 $m^2/g$, a pore volume from 0.8 $cm^3/g$ to 3.0 $cm^3/g$, and an average particle size of from 5 $\mu m$ to 100 $\mu m$. The average pore size of the support material is typically from 10 Angstroms (Å) to 1,000 Å, such as from 50 Å to 500 Å or from 75 Å to 350 Å.

There are various suitable methods to produce the catalyst systems of the present disclosure. In one or more embodiments, methods for producing the catalyst system include contacting one or more support materials, one or more

activators, and a metal-ligand complex in an inert hydrocarbon solvent to produce the catalyst system. In some embodiments, the method for producing the catalyst system may include disposing the one or more activators on the one or more support materials to produce a supported activator, and contacting the supported activator with a solution of the metal-ligand complex in an inert hydrocarbon solvent (often referred to as a "trim catalyst" or a "trim feed"). For example, in some embodiments, methods for producing the catalyst system include contacting a spray-dried supported activator (*i.e.,* a supported activator produced via pray drying) with a solution of the metal-ligand complex in an inert hydrocarbon solvent. In some embodiments, the supported activator may be included in a slurry, such as, for example a mineral oil slurry.

In some embodiments, the method for producing the catalyst system may include mixing one or more support materials, one or more activators, and a metal-ligand complex to produce a catalyst system precursor. The methods may further include drying the catalyst system precursor to produce the catalyst system. More specifically, the methods may include making a mixture of the metal-ligand complex, one or more support materials, one or more activators, or a combinations of these, and an inert hydrocarbon solvent. The inert hydrocarbon solvent may then be removed from the mixture so as to produce the metal-ligand complex, the one or more activators, or combinations of these, disposed on the one or more support materials. In embodiments, the removing step may be achieved via conventional evaporating of the inert hydrocarbon solvent from the mixture (*i.e.,* conventional concentrating method), which yields an evaporated/supported catalyst system. In other embodiments, the removing step may be achieved by spray-drying the mixture, which produces spray-dried particles. It should be understood that the drying and/or removing steps may not result in the complete removal of liquids from the resulting catalyst system. That is, the catalyst system may include residual amounts (*i.e.,* from 1 wt.% to 3 wt.%) of the inert hydrocarbon solvent.

As noted above, the catalyst systems of the present disclosure may be utilized in processes for producing polymers, such as polyethylene, via the polymerization of olefins, such as ethylene. In embodiments, one or more olefins may be contacted with the catalyst systems of the present disclosure in a gas-phase polymerization reactor, such as a gas-phase fluidized bed polymerization reactor. Exemplary gas-phase systems are described in U.S. Patent Nos. 5,665,818; 5,677,375; and 6,472,484; and European Patent Nos. 0 517 868 and 0 794 200. For example, in some embodiments, ethylene and, optionally, one or more $(C_3\text{-}C_{12})\alpha$-olefin comonomers may be contacted with the catalyst systems of the present disclosure in a gas-phase polymerization reactor. The catalyst system may be fed to the gas-phase polymerization reactor in neat form (*i.e.*, as a dry solid), as a solution, or as a slurry. For example, in some embodiments, spray-dried particles of the catalyst system may be fed directly to the gas-phase polymerization reactor. In other embodiments, a solution or slurry of the catalyst system in a solvent, such as an inert hydrocarbon or mineral oil, may be fed to the reactor. For example, the procatalyst may be fed to the reactor in an inert hydrocarbon solution and the activator may be fed to the reactor in a mineral oil slurry.

In embodiments, the gas-phase polymerization reactor comprises a fluidized bed reactor. A fluidized bed reactor may include a "reaction zone" and a "velocity reduction zone." The reaction zone may include a bed of growing polymer particles, formed polymer particles, and a minor amount of the catalyst system fluidized by the continuous flow of the gaseous monomer and diluent to remove heat of polymerization through the reaction zone. Optionally, some of the re-circulated gases may be cooled and compressed to form liquids that increase the heat removal capacity of the circulating gas stream when readmitted to the reaction zone. A suitable rate of gas flow may be readily determined by simple experiment. Make up of gaseous monomer to the circulating gas stream may be at a rate equal to the rate at which particulate polymer product and monomer associated therewith may be withdrawn from the reactor and the composition of the gas passing through the reactor may be adjusted to maintain an essentially steady state gaseous composition within the reaction zone. The gas leaving the reaction zone may be passed to the velocity reduction zone where entrained particles are removed. Finer entrained particles and dust may be removed in a cyclone and/or fine filter. The gas may be passed through a heat exchanger where the heat of polymerization may be removed, compressed in a compressor, and then returned to the reaction zone. Additional reactor details and means for operating the reactor are described in, for example, U.S. Patent Nos. 3,709,853; 4,003,712; 4,011,382; 4,302,566; 4,543,399; 4,882,400; 5,352,749; and 5,541,270; European Patent No. 0 802 202; and Belgian Patent No. 839,380.

In embodiments, the reactor temperature of the gas-phase polymerization reactor is from 30 °C to 150 °C. For example, the reactor temperature of the gas-phase polymerization reactor may be from 30 °C to 120 °C, from 30 °C to 110 °C, from 30 °C to 100 °C, from 30 °C to 90 °C, from 30 °C to 50 °C, from 30 °C to 40 °C, from 40 °C to 150 °C, from 40 °C to 120 °C, from 40 °C to 110 °C, from 40 °C to 100 °C, from 40 °C to 90 °C, from 40 °C to 50 °C, from 50 °C to 150 °C, from 50 °C to 120 °C, from 50 °C to 110 °C, from 50 °C to 100 °C, from 50 °C to 90 °C, from 90 °C to 150 °C, from 90 °C to 120 °C, from 90 °C to 110 °C, from 90 °C to 100 °C, from 100 °C to 150 °C, from 100 °C to 120 °C, from 100 °C to 110 °C, from 110 °C to 150 °C, from 110 °C to 120 °C, or from 120 °C to 150 °C. Generally, the gas-phase polymerization reactor may be operated at the highest temperature feasible, taking into account the sintering temperature of the polymer product within the reactor. Regardless of the process used to make the polyethylene, the reactor temperature should be below the melting or "sintering" temperature of the polymer product. As a result, the upper temperature limit may be the melting temperature of the polymer product.

In embodiments, the reactor pressure of the gas-phase polymerization reactor is from 690 kPa (100 psig) to 3,448 kPa (500 psig). For example, the reactor pressure of the gas-phase polymerization reactor may be from 690 kPa (100 psig) to 2,759 kPa (400 psig), from 690 kPa (100 psig) to 2,414 kPa (350 psig), from 690 kPa (100 psig) to 1,724 kPa (250 psig), from 690 kPa (100 psig) to 1,379 kPa (200 psig), from 1,379 kPa (200 psig) to 3,448 kPa (500 psig), from 1,379 kPa (200 psig) to 2,759 kPa (400 psig), from 1,379 kPa (200 psig) to 2,414 kPa (350 psig), from 1,379 kPa (200 psig) to 1,724 kPa (250 psig), from 1,724 kPa (250 psig) to 3,448 kPa (500 psig), from 1,724 kPa (250 psig) to 2,759 kPa (400 psig), from 1,724 kPa (250 psig) to 2,414 kPa (350 psig), from 2,414 kPa (350 psig) to 3,448 kPa (500 psig), from 2,414 kPa (350 psig) to 2,759 kPa (400 psig), or from 2,759 kPa (400 psig) to 3,448 kPa (500 psig).

In embodiments, hydrogen gas may be used in during polymerization to control the final properties of the polyethylene. The amount of hydrogen in the polymerization may be expressed as a mole ratio relative to the total polymerizable monomer, such as, for example, ethylene or a blend of ethylene and 1-hexene. The amount of hydrogen used in the polymerization process may be an amount necessary to achieve the desired properties of the polyethylene, such as, for example, melt flow rate (MFR). In embodiments, the mole ratio of hydrogen to total polymerizable monomer ($H_2$:monomer) is greater than 0.0001. For example, the mole ratio of hydrogen to total polymerizable monomer ($H_2$:monomer) may be from 0.0001 to 10, from 0.0001 to 5, from 0.0001 to 3, from 0.0001 to 0.10, from 0.0001 to 0.001, from 0.0001 to 0.0005, from 0.0005 to 10, from 0.0005 to 5, from 0.0005 to 3, from 0.0005 to 0.10, from 0.0005 to 0.001, from 0.001 to 10, from 0.001 to 5, from 0.001 to 3, from 0.001 to 0.10, from 0.10 to 10, from 0.10 to 5, from 0.10 to 3, from 3 to 10, from 3 to 5, or from 5 to 10.

In embodiments, the catalyst systems of the present disclosure may be utilized to polymerize a single type of olefin, producing a homopolymer. However, additional α-olefins may be incorporated into the polymerization scheme in other embodiments. The additional α-olefin comonomers typically have no more than 20 carbon atoms. For example, the catalyst systems of the present disclosure may be utilized to polymerize ethylene and one or more ($C_3$-$C_{12}$)α-olefin comonomers. Exemplary α-olefin comonomers include, but are not limited to, propylene, 1-butene, 1-pentene, 1-hexene, 1-heptene, 1-octene, 1-nonene, 1-decene, and 4-methyl-1-pentene. For example, the one or more α-olefin co-monomers may be selected from the group consisting of propylene, 1-butene, 1-hexene, and 1-octene; or, in the alternative, from the group consisting of 1-hexene and 1-octene.

In embodiments, the one or more ($C_3$-$C_{12}$)α-olefin comonomers may not be derived from propylene. That is, the one or more ($C_3$-$C_{12}$)α-olefin comonomers may be substantially free of propylene. The term "substantially free" of a compound means the material or mixture includes less than 1.0 wt.% of the compound. For example, the one or more ($C_3$-$C_{12}$)α-olefin comonomers, which may be substantially free of propylene, may include less than 1.0 wt.% propylene, such as less than 0.8 wt.% propylene, less than 0.6 wt.% propylene, less than 0.4 wt.% propylene, or less than 0.2 wt.% propylene.

In embodiments, the polyethylene produced, for example homopolymers and/or interpolymers (including copolymers) of ethylene and, optionally, one or more comonomers may include at least 50 mole percent (mol.%) monomer units derived from ethylene. For example, the polyethylene may include at least 60 mol.%, at least 70 mol.%, at least 80 mol.%, or at least 90 mol.% monomer units derived from ethylene. In embodiments, the polyethylene includes from 50 mol.% to 100 mol.% monomer units derived from ethylene. For example, the polyethylene may include from 50 mol.% to 90 mol.%, from 50 mol.% to 80 mol.%, from 50 mol.% to 70 mol.%, from 50 mol.% to 60 mol.%, from 60 mol.% to 100 mol.%, from 60 mol.% to 90 mol.%, from 60 mol.% to 80 mol.%, from 60 mol.% to 70 mol.%, from 70 mol.% to 100 mol.%, from 70 mol.% to 90 mol.%, from 70 mol.% to 80 mol.%, from 80 mol.% to 100 mol.%, from 80 mol.% to 90 mol.%, or from 90 mol.% to 100 mol.% monomer units derived from ethylene.

In embodiments, the polyethylene produced includes at least 90 mol.% monomer units derived from ethylene. For example, the polyethylene may include at least 93 mol.%, at least 96 mol.%, at least 97 mol.%, or at least 99 mol.% monomer units derived from ethylene. In embodiments, the polyethylene includes from 90 mol.% to 100 mol.% monomer units derived from ethylene. For example, the polyethylene may include from 90 mol.% to 99.5 mol.%, from 90 mol.% to 99 mol.%, from 90 mol.% to 97 mol.%, from 90 mol.% to 96 mol.%, from 90 mol.% to 93 mol.%, from 93 mol.% to 100 mol.%, from 93 mol.% to 99.5 mol.%, from 93 mol.% to 99 mol.%, from 93 mol.% to 97 mol.%, from 93 mol.% to 96 mol.%, from 96 mol.% to 100 mol.%, from 96 mol.% to 99.5 mol.%, from 96 mol.% to 99 mol.%, from 96 mol.% to 97 mol.%, from 97 mol.% to 100 mol.%, from 97 mol.% to 99.5 mol.%, from 97 mol.% to 99 mol.%, from 99 mol.% to 100 mol.%, from 99 mol.% to 99.5 mol.%, or from 99.5 mol.% to 100 mol.% monomer units derived from ethylene.

In embodiments, the polyethylene produced includes less than 50 mol.% monomer units derived from an additional α-olefin. For example, the polyethylene may include less than 40 mol%, less than 30 mol.%, less than 20 mol.% or less than 10 mol.% monomer units derived from an additional α-olefin. In embodiments, the polyethylene includes from 0 mol.% to 50 mol.% monomer units derived from an additional α-olefin. For example, the polyethylene may include from 0 mol.% to 40 mol.%, from 0 mol.% to 30 mol.%, from 0 mol.% to 20 mol.%, from 0 mol.% to 10 mol.%, from 0 mol.% to 5 mol.%, from 0 mol.% to 1 mol.%, from 1 mol.% to 50 mol.%, from 1 mol.% to 40 mol.%, from 1 mol.% to 30 mol.%, from 1 mol.% to 20 mol.%, from 1 mol.% to 10 mol.%, from 1 mol.% to 5 mol.%, from 5 mol.% to 50 mol.%, from 5 mol.% to 40 mol.%, from 5 mol.% to 30 mol.%, from 5 mol.% to 20 mol.%, from 5 mol.% to 10 mol.%, from 10

mol.% to 50 mol.%, from 10 mol.% to 40 mol.%, from 10 mol.% to 30 mol.%, from 10 mol.% to 20 mol.%, from 20 mol.% to 50 mol.%, from 20 mol.% to 40 mol.%, from 20 mol.% to 30 mol.%, from 30 mol.% to 50 mol.%, from 30 mol.% to 40 mol.%, or from 40 mol.% to 50 mol.% monomer units derived from an additional $\alpha$-olefin.

In embodiments, the polyethylene produced further includes one or more additives. Such additives include, but are not limited to, antistatic agents, color enhancers, dyes, lubricants, pigments, primary antioxidants, secondary antioxidants, processing aids, ultraviolet (UV) stabilizers, and combinations of these. The polyethylene may include any amounts of additives. In embodiments, the produced polyethylene further includes fillers, which may include, but are not limited to, organic or inorganic fillers, such as, for example, calcium carbonate, talc, or $Mg(OH)_2$.

The produced polyethylene may be used in a wide variety of products and end-use applications. The produced polyethylene may also be blended and/or co-extruded with any other polymer. Non-limiting examples of other polymers include linear low density polyethylene, elastomers, plastomers, high pressure low density polyethylene, high density polyethylene, polypropylenes, and the like. The produced polyethylene and blends including the produced polyethylene may be used to produce blow-molded components or products, among various other end uses. The produced polyethylene and blends including the produced polyethylene may be useful in forming operations such as film, sheet, and fiber extrusion and co-extrusion as well as blow molding, injection molding and rotary molding. Films may include blown or cast films formed by coextrusion or by lamination useful as shrink film, cling film, stretch film, sealing films, oriented films, snack packaging, heavy duty bags, grocery sacks, baked and frozen food packaging, medical packaging, industrial liners, and membranes in food-contact and non-food contact applications. Fibers may include melt spinning, solution spinning and melt blown fiber operations for use in woven or non-woven form to make filters, diaper fabrics, medical garments, and geotextiles. Extruded articles may include medical tubing, wire and cable coatings, pipe, geomembranes, and pond liners. Molded articles may include single and multi-layered constructions in the form of bottles, tanks, large hollow articles, rigid food containers and toys.

## TEST METHODS

### *Polymerization Activity*

Unless indicated otherwise, all polymerization activities (also referred to as productivities) presently disclosed were determined as a ratio of polymer produced to the amount of catalyst added to the reactor and are reported in grams of polymer per grams of catalyst per hour (gPE/gcat/hr).

### *Comonomer Content*

Unless indicated otherwise, all comonomer contents (*i.e.,* the amount of comonomer incorporated into a polymer) presently disclosed were determined by rapid FT-IR spectroscopy on dissolved polymer in a Gel Permeation Chromatography (GPC) measurement and are reported in weight percent (wt.%). The comonomer content of a polymer can be determined with respect to polymer molecular weight by use of an infrared detector, such as an IR5 detector, in a GPC measurement, as described in Lee et al., Toward absolute chemical composition distribution measurement of polyolefins by high-temperature liquid chromatography hyphenated with infrared absorbance and light scattering detectors, 86 ANAL. CHEM. 8649 (2014).

### *Uptake Ratio*

Unless indicated otherwise, all uptake ratios presently disclosed were determined as a ratio of an amount of monomer units derived from a comonomer (*e.g.*, a $(C_3\text{-}C_{12})\alpha$-olefin comonomer) to an amount of monomer units derived from ethylene.

### *Molecular Weight*

Unless indicated otherwise, all molecular weights disclosed herein, including weight average molecular weight ($M_w$), number average molecular weight ($M_n$), and z-average molecular weight ($M_z$), were measured using conventional GPC and are reported in grams per mole (g/mol).

The chromatographic system consisted of a High Temperature Gel Permeation Chromatography (Polymer Laboratories), equipped with a differential refractive index detector (DRI). Three Polymer Laboratories PLgel 10$\mu$m Mixed-B columns were used. The nominal flow rate was 1.0 mL/min, and the nominal injection volume was 300 $\mu$L. The various transfer lines, columns, and differential refractometer (the DRI detector) were contained in an oven maintained at 160°C. The solvent for the experiment was prepared by dissolving 6 grams of butylated hydroxytoluene as an antioxidant in 4 liters of Aldrich reagent-grade 1,2,4-trichlorobenzene (TCB). The TCB mixture was then filtered through a 0.1 $\mu$m

Teflon filter. The TCB was then degassed with an online degasser before entering the GPC instrument.

The polymer solutions were prepared by placing dry polymer in glass vials, adding the desired amount of TCB, then heating the mixture at 160 °C with continuous shaking for about 2 hours. All quantities were measured gravimetrically. The injection concentration was from 0.5 to 2.0 mg/ml, with lower concentrations being used for higher molecular weight samples. Prior to running each sample the DRI detector was purged. The flow rate in the apparatus was then increased to 1.0 ml/minute, and the DRI was allowed to stabilize for 8 hours before injecting the first sample. The molecular weight was determined by combining universal calibration relationship with the column calibration which is performed with a series of monodispersed polystyrene (PS) standards. The MW was calculated at each elution volume with following equation:

$$\log M_X = \frac{\log(K_X / K_{PS})}{a_X + 1} + \frac{a_{PS} + 1}{a_X + 1} \log M_{PS}$$

where the variables with subscript "X" stand for the test sample while those with subscript "PS" stand for PS. In this method, $a_{PS}$ =0.67 and $K_{PS}$ =0.000175, while $a_X$ and $K_X$ were obtained from published literature. Specifically, a/K = 0.695/0.000579 for PE and 0.705/0.0002288 for PP.

The concentration, c, at each point in the chromatogram was calculated from the baseline-subtracted DRI signal, IDRI, using the following equation:

$$c = \frac{KDRI \times IDRI}{dn/_{dc}}$$

where KDRI is a constant determined by calibrating the DRI, and (dn/dc) is the refractive index increment for the system. Specifically, dn/dc = 0.109 for polyethylene.

The mass recovery was calculated from the ratio of the integrated area of the concentration chromatography over elution volume and the injection mass which is equal to the pre-determined concentration multiplied by injection loop volume.

## EXAMPLES

### *Synthesis of Metal-Ligand Complex 1 (MLC1)*

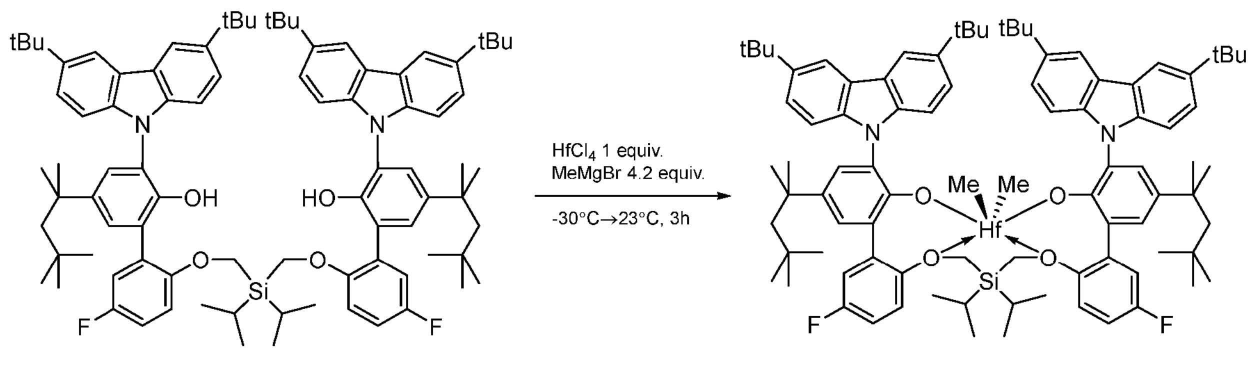


In a glovebox, MeMgBr (methylmagnesium bromide) in diethyl ether (3.00 M, 0.28 mL, 0.84 mmol, 4.2 eq) was added to a -30 °C suspension of $HfCl_4$ (64 mg, 0.2 mmol, 1.0 eq) in anhydrous toluene (6.0 mL). After stirring the resulting mixture for 10 minutes, solid ligand (described in International Publication No. WO 2018/022975 A1; 266 mg, 0.2 mmol, 1.0 eq) was added portionwise. The resulting mixture was stirred overnight before the solvent was removed under vacuum to afford a dark residue, which was extracted with hexanes (12 mL). The resulting extract was concentrated to approximately 2 mL and placed in a freezer for one day. Any remaining solvent was decanted and the remaining material was dried under vacuum, which provided a metal-ligand complex (204 mg, yield: 66%) as a white powder:

$^1$H NMR (400 MHz, $C_6D_6$) δ 8.64 - 8.60 (m, 2H), 8.42 - 8.38 (m, 2H), 7.67 - 7.47 (m, 8II), 7.45 - 7.39 (m, 2II), 7.26 (d, *J* = 2.5 IIz, 2II), 7.07 (dd, *J* = 8.9, 3.1 IIz, 3II), 6.84 - 6.75 (m, 2H), 5.27 - 5.19 (m, 2H), 4.35 (d, *J* = 14.1 Hz, 2H), 3.29 (d, *J* = 14.1 Hz, 2H), 1.57 (d, *J* = 3.5 Hz, 4H), 1.47 (s, 18H), 1.34 - 1.19 (m, 30H), 0.80 (s, 18H), 0.58 - 0.48 (m, 12H), 0.35 - 0.24 (m, 2H), -1.08 (s, 6H).

$^{19}$F{1H} NMR (376 MHz, $CDCl_3$) δ -116.40 (m, 2F).

***Synthesis of Metal-Ligand Complex 2 (MLC-2)***

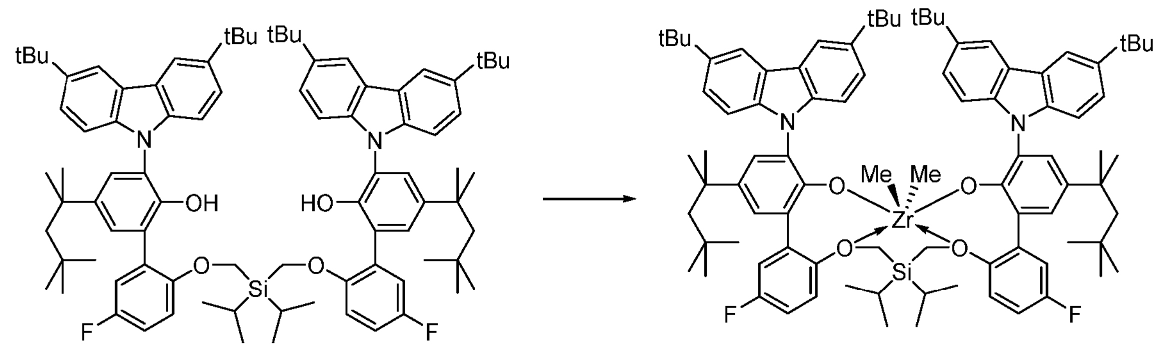

In a glovebox, MeMgBr in diethyl ether (3.00 M, 5.33 mL, 16.0 mmol) was added to a -30 °C suspension of $ZrCl_4$ (0.895 g, 3.84 mmol) in anhydrous toluene (60 mL). After stirring for 3 minutes, the solid ligand (described in International Publication No. WO 2018/022975 A1; 5.00 g, 3.77 mmol) was added portionwise. The resulting mixture was stirred for 8 hours before the solvent was removed under reduced pressure overnight to afford a dark residue. Hexanes/toluene (10:1, 70 mL) was added to the residue and the resulting solution was shaken for a few minutes at room temperature before being passed through a fritted funnel CELITE plug. The resulting frit was extracted with hexanes (2 × 15 mL) and the combined extracts were concentrated to dryness under reduced pressure. Pentane (20 mL) was added to the resulting tan solid and placed in a freezer at -35 °C for 18 hours. The resulting brown pentane layer was removed using a pipette and the remaining material was dried under vacuum, which provided a metal-ligand complex (4.50 g, yield: 83%) as a white powder:

$^1$H NMR (400 MHz, $C_6D_6$) δ 8.65 - 8.56 (m, 2H), 8.40 (dd, *J* = 2.0, 0.7 Hz, 2H), 7.66 - 7.55 (m, 8H), 7.45 (d, *J* = 1.9 Hz, 1H), 7.43 (d, *J* = 1.9 Hz, 1H), 7.27 (d, *J* = 2.5 Hz, 2H), 7.10 (d, *J* = 3.2 Hz, 1H), 7.08 (d, *J* = 3.1 Hz, 1H), 6.80 (ddd, *J* = 9.0, 7.4, 3.2 Hz, 2H), 5.21 (dd, *J* = 9.1, 4.7 Hz, 2H), 4.25 (d, *J* = 13.9 Hz, 2H), 3.23 (d, *J* = 14.0 Hz, 2H), 1.64 - 1.52 (m, 4H), 1.48 (s, 18H), 1.31 (s, 24H), 1.27 (s, 6H), 0.81 (s, 18H), 0.55 (t, *J* = 7.3 Hz, 12H), 0.31 (hept, *J* = 7.5 Hz, 2H), -0.84 (s, 6H); $^{19}$F NMR (376 MHz, $C_6D_6$) δ -116.71.

***Synthesis of Metal-Ligand Complex 3 (MLC-3)***

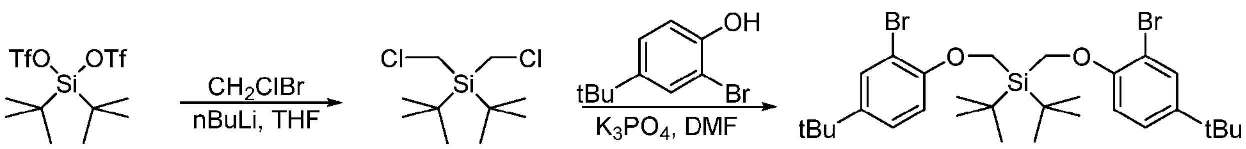


In a glovebox, di-*t*-butylsilyl ditriflate (4.41 g, 10.0 mmol, 1.0 eq) was dissolved in anhydrous THF (50 mL) in a 250 mL single-neck round-bottom flask. The flask was capped with a septum, sealed, taken out of glove box, and cooled to -78 °C in a dry ice-acetone bath before adding bromochloromethane (1.95 mL, 30 mmol, 3.0 eq). Next, a solution of n-BuLi (9.2 mL, 23.0 mmol, 2.3 eq) in hexane was added to the cooled wall of the flask over a period of 3 hours using a syringe pump. The resulting mixture was allowed to warm up to room temperature overnight (approximately 16 hours) before adding saturated $NH_4Cl$ (30 mL). The resulting two layers were separated and the aqueous layer was extracted with ether (2 × 50 mL). The combined organic layer was dried over $MgSO_4$, filtered, and concentrated under reduced pressure. The crude product was used for the next step without further purification.

In a glovebox, a 40 mL vial was charged with bis(chloromethyl)di-t-butylsilane (1.21 g, 5.0 mmol, 1.0 eq), 4-t-butyl-2-bromophenol (4.6 g, 20.0 mmol, 4.0 eq), $K_3PO_4$ (6.39 g, 30.0 mmol, 6.0 eq), and DMF (5 mL), and the reaction mixture was stirred at 110 °C overnight. After cooling down to room temperature, the reaction mixture was purified by column chromatography using ether/hexane (0/100 - 30/70) as the eluent, which provided bis((2-bromo-4-*t*-butylphenoxy)methyl)di-*t*-butylsilane (2.6 g, yield: 83%) as a colorless oil:

$^1H$ NMR (400 MHz, $CDCl_3$) δ 7.53 (d, J = 2.4 Hz, 2H), 7.28 (dd, J = 8.6, 2.4 Hz, 2H), 7.00 (d, J = 8.7 Hz, 2H), 3.96 (s, 4H), 1.29 (s, 18H), 1.22 (s, 18H).

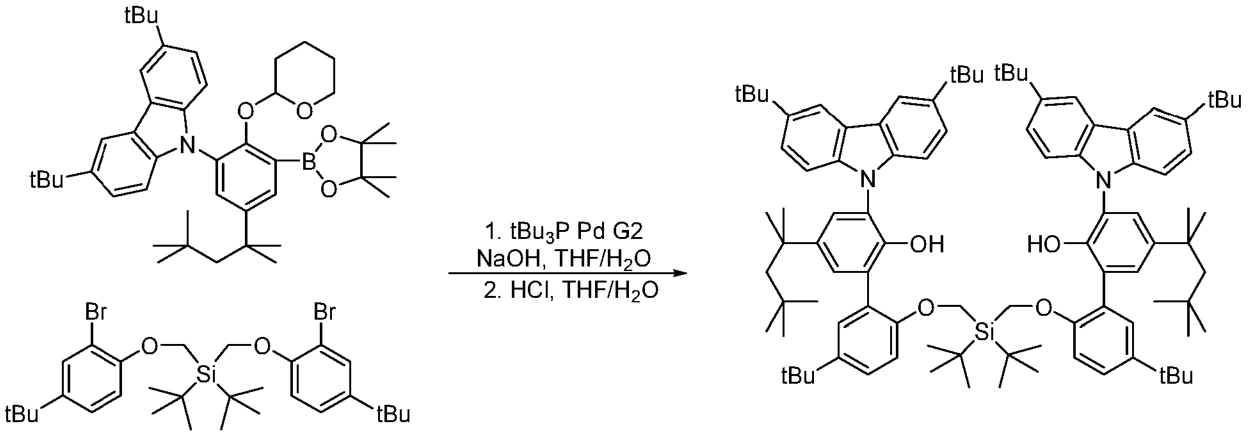


In a glovebox, a 40 mL vial equipped with a stir bar was charged with bis((2-bromo-4-*t*-butylphenoxy)methyl)di-t-butylsilane (0.46 g, 0.73 mmol, 1.0 eq), 3,6-di-tert-butyl-9-(2-((tetrahydro-2H-pyran-2-yl)oxy)-3-(4,4,5,5-tetramethyl-1,3,2-dioxaborolan-2-yl)-5-(2,4,4-trimethylpentan-2-yl)phenyl)-9H-carbazole (1.53 g, 2.2 mmol, 3.0 eq), *t*$Bu_3$P Pd G2 (0.011 g, 0.022 mmol, 0.03 eq), THF (2 mL), and NaOH (4M, 1.1 mL, 4.4 mmol, 6.0 eq). The vial was heated under nitrogen at 55 °C for 2 hours. When completed, the top organic layer was extracted with ether and filtered through a short plug of silica gel, and solvents were removed under reduced pressure. The resulting residue was dissolved in THF (10 mL) and MeOH (10 mL). Concentrated HCl (0.5 mL) was then added. The resulting mixture was heated at 75 °C for 2 hours before being cooled to room temperature. The solvents were then removed under reduced pressure and the resulting residue was purified by reverse phase column chromatography using THF/MeCN (0/100 > 100/0) as the eluent, which provided 6',6'''-(((di-*t*-butylsilanediyl)bis(methylene))bis(oxy))bis(3-(3,6-di-*t*-butyl-9H-carbazol-9-yl)-3'-fluoro-5-(2,4,4-trimethylpentan-2-yl)-[1,1'-biphenyl]-2-ol) (0.71 g, yield: 67%) as a white solid:

$^1H$ NMR (400 MHz, $CDCl_3$) δ 8.44 - 8.07 (m, 6H), 7.59 - 7.45 (m, 2H), 7.23 - 7.11 (m, 4H), 6.99 - 6.69 (m, 6H), 6.53 - 6.38 (m, 2H), 5.26 - 5.16 (m, 4H), 3.81 (br s, 2H), 3.19 (br s, 2H), 1.60 - 1.05 (m, 70H), 0.85 (s, 18H), 0.74 (s, 18H).

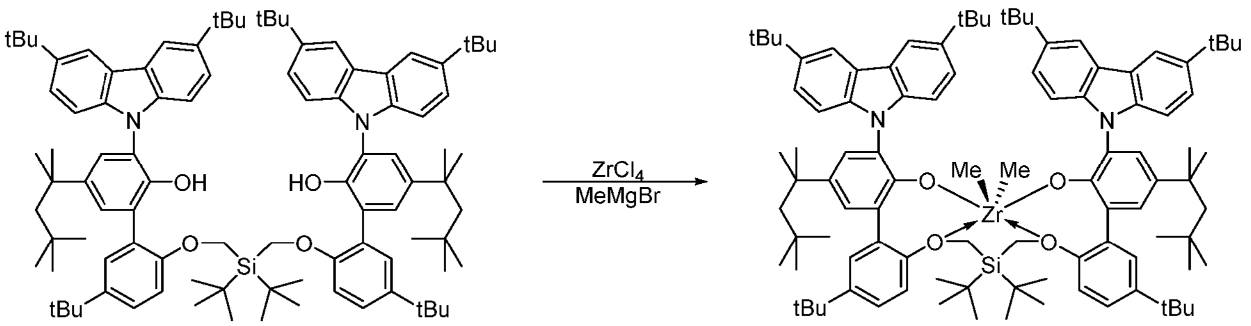


In a glovebox, MeMgBr (methylmagnesium bromide) in diethyl ether (3 M, 0.28 mL, 0.84 mmol, 4.2 eq) was added to a -30 °C suspension of $ZrCl_4$ (47 mg, 0.2 mmol, 1.0 eq) in anhydrous toluene (6.0 mL). After stirring the resulting mixture for 2 minutes, solid 6',6'''-(((di-*t*-butylsilanediyl)bis(methylene))bis(oxy))bis(3-(3,6-di-*t*-butyl-9H-carbazol-9-yl)-3'-fluoro-5-(2,4,4-trimethylpentan-2-yl)-[1,1'-biphenyl]-2-ol) (287 mg, 0.2 mmol, 1.0 eq) was added portion wise. The resulting mixture was stirred overnight before the solvent was removed under vacuum to afford a dark residue, which was extracted with hexanes (15 mL). The resulting extract was concentrated to approximately 2-3 mL and placed in a freezer for one day. Any remaining solvent was decanted and the remaining material was dried under vacuum, which provided a metal-ligand complex (250 mg, yield: 80%) as a white powder:

$^1H$ NMR (400 MHz, $C_6D_6$) δ 8.71 (d, J = 1.7 Hz, 2H), 8.38 (d, J = 1.7 Hz, 2H), 7.68 - 7.59 (m, 6H), 7.52 - 7.42 (m, 6H), 7.34 (s, 2H), 7.33 (dd, J = 8.7, 1.9 Hz, 2H), 7.24 (dd, J = 8.7, 2.6 Hz, 2H), 5.17 (d, J = 8.7 Hz, 2H), 4.05 (d, J =

13.5 Hz, 2H), 3.08 (d, J = 13.5 Hz, 2H), 1.85 - 1.77 (m, 2H), 1.70 - 1.62 (m, 2H), 1.57 (s, 18H), 1.45 - 1.32 (m, 48H), 0.95 (s, 18H), 0.59 (s, 18H), -1.22 (s, 6H).

***Synthesis of Metal-Ligand Complex 4 (MLC-4)***

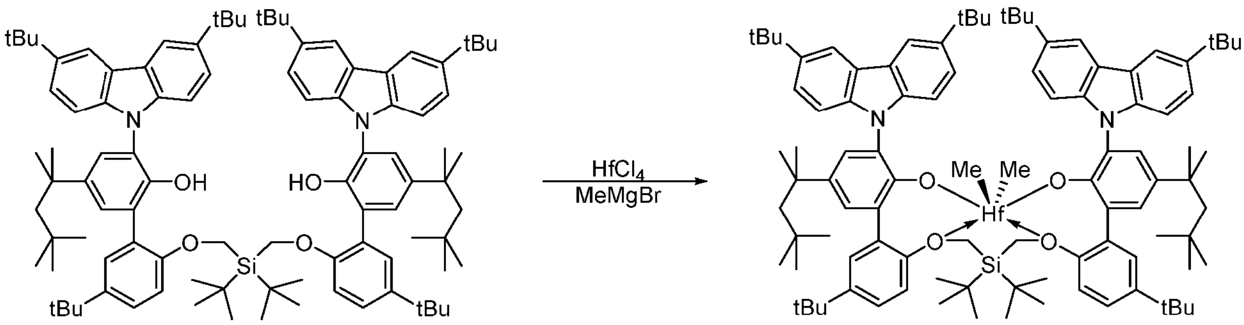


In a glovebox, MeMgBr (methylmagnesium bromide) in diethyl ether (3 M, 0.28 mL, 0.84 mmol, 4.2 eq) was added to a -30 °C suspension of $HfCl_4$ (64 mg, 0.2 mmol, 1.0 eq) in anhydrous toluene (6.0 mL). After stirring the resulting mixture for 10 minutes, solid ligand (described previously with regard to MLC-3; 287 mg, 0.2 mmol, 1.0 eq) was added portionwise. The resulting mixture was stirred overnight before the solvent was removed under vacuum to afford a dark residue, which was extracted with hexanes (15 mL). The resulting extract was concentrated to approximately 2-3 mL and placed in a freezer for one day. Any remaining solvent was decanted and the remaining material was dried under vacuum, which provided a metal-ligand complex (270 mg, yield: 82%) as a white powder:

$^1$H NMR (400 MHz, $C_6D_6$) δ 8.71 (d, J = 1.9 Hz, 2H), 8.38 (d, J = 1.9 Hz, 2H), 7.69 - 7.59 (m, 6H), 7.49 (dd, J = 11.6, 2.5 Hz, 4H), 7.42 - 7.37 (m, 2H), 7.32 (dd, J = 8.7, 1.8 Hz, 2H), 7.28 - 7.23 (m, 2H), 5.20 (d, J = 8.7 Hz, 2H), 4.14 (d, J = 13.6 Hz, 2H), 3.14 (d, J = 13.6 Hz, 2H), 1.85 - 1.77 (m, 2H), 1.69 - 1.62 (m, 2H), 1.57 (s, 18H), 1.45 - 1.32 (m, 48H), 0.95 (s, 18H), 0.58 (s, 18H), -1.47 (s, 6H).

***Synthesis of Metal-Ligand Complex 5 (MLC-5)***

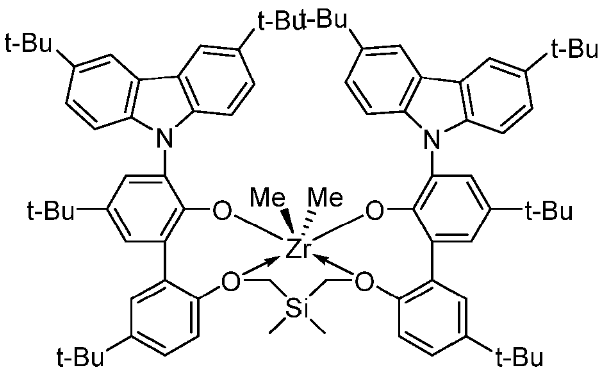

In a glovebox, MeMgBr in diethyl ether (3 M, 0.11 mL, 0.32 mmol) was added to a -35 °C suspension of $ZrCl_4$ (0.019 g, 0.081 mmol) in anhydrous toluene (5 mL). After stirring the resulting mixture for 5 minutes, ligand (described in U.S. Patent No. 9,029,487; 0.100 g, 0.081 mmol) in toluene (5 mL) was added portionwise. The resulting mixture was stirred overnight before the solvent was removed under vacuum to afford a dark residue, which was extracted with a mixture of hexane and toluene (1:1, 10 mL). The resulting extract was filtered and dried under vacuum, which provided a metal-ligand complex (0.075 g, yield: 68%) as a white powder:

$^1$H NMR (400 MHz, $C_6D_6$): δ 8.46 - 8.30 (m, 2H), 8.06 (dt, J = 7.5, 1.1 Hz, 2H), 7.67 (d, J = 2.6 Hz, 2H), 7.65 (d, J = 8.2 Hz, 2H), 7.56 (d, J = 2.7 Hz, 2H), 7.53 (d, J = 8.3 Hz, 2H), 7.51 (d, J = 2.5 Hz, 2H), 7.50 - 7.45 (m, 2H), 7.42 (td, J = 7.4, 1.1 Hz, 2H), 7.14 - 6.93 (m, 2H), 5.14 (d, J = 8.6 Hz, 2H), 4.18 (d, J = 14.1 Hz, 2H), 3.07 (d, J = 14.1 Hz, 2H), 1.29 (s, 18H), 1.15 (s, 18H), -0.70 (s, 6H), -0.82 (s, 6H).

***Synthesis of Metal-Ligand Complex 6 (MLC-6)***

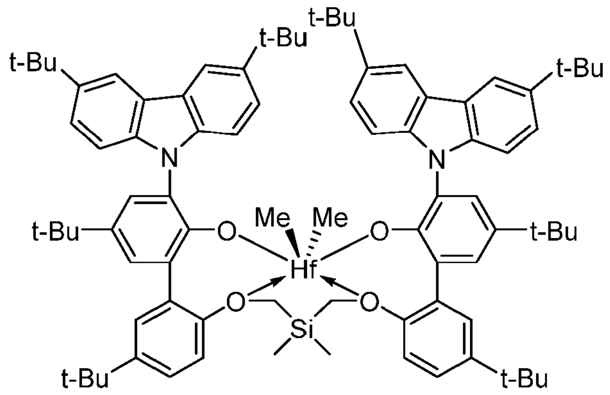

In a glovebox, MeMgBr in diethyl ether (3 M, 0.11 mL, 0.32 mmol) was added to a -35 °C suspension of $HfCl_4$ (0.026 g, 0.081 mmol) in anhydrous toluene (5 mL). After stirring the resulting mixture for 5 minutes, ligand (described in U.S. Patent No. 9,029,487; 0.100 g, 0.081 mmol) in toluene (5 mL) was added portionwise. The resulting mixture was stirred overnight before the solvent was removed under vacuum to afford a dark residue, which was extracted with a mixture of hexane and toluene (1:1, 10 mL). The resulting extract was filtered and dried under vacuum, which provided a metal-ligand complex (0.089 g, yield: 76%) as a white powder:

$^1H$ NMR (400 MHz, $C_6D_6$): δ 8.44 - 8.33 (m, 2H), 8.10 - 8.03 (m, 2H), 7.69 (d, J = 2.6 Hz, 2H), 7.67 - 7.63 (m, 2H), 7.56 (d, J = 2.6 Hz, 2H), 7.52 - 7.46 (m, 8H), 7.45 - 7.40 (m, 2H), 7.14 - 6.98 (m, 2H), 5.15 (d, J = 8.7 Hz, 2H), 4.30 (d, J = 14.2 Hz, 2H), 3.14 (d, J = 14.3 Hz, 2H), 1.30 (s, 18H), 1.14 (s, 18H), -0.72 (s, 6H), -1.04 (s, 6H).

***Synthesis of Metal-Ligand Complex* 7 *(MLC-7)***

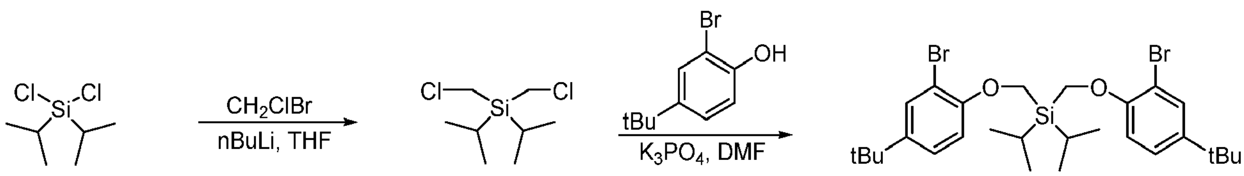


In a glovebox, diisopropyldichlorosilane (3.703 g, 20 mmol, 1.0 eq) was dissolved in anhydrous THF (120 mL) in a 250 mL single-neck round-bottom flask. The flask was capped with a septum, sealed, taken out of glovebox, and cooled to -78 °C in a dry ice-acetone bath before adding bromochloromethane (3.9 mL, 60 mmol, 3.0 eq). Next, a solution of n-BuLi (18.4 mL, 46 mmol, 2.3 eq) in hexane was added to the cooled wall of the flask over a period of 3 hours using a syringe pump. The mixture was allowed to warm up to room temperature overnight (approximately 16 hours) before adding saturated $NH_4Cl$ (30 mL). The resulting two layers were separated and the aqueous layer was extracted with ether (2 × 50 mL). The combined organic layer was dried over $MgSO_4$, filtered, and concentrated under reduced pressure. The crude product was used for the next step without further purification.

In a glovebox, a 40 mL vial was charged with bis(chloromethyl)diisopropylsilane (2.14 g, 10 mmol, 1.0 eq), 4-*t*-butyl-2-bromophenol (6.21 g, 27 mmol, 2.7 eq), $K_3PO_4$ (7.46 g, 35 mmol, 3.5 eq), and DMF (10 mL), and the reaction mixture was stirred at 80 °C overnight. After cooling down to room temperature, the reaction mixture was purified by column chromatography using ether/hexane (0/100 > 30/70) as the eluent, which provided bis((2-bromo-4-*t*-butylphenoxy)methyl)diisopropylsilane (4.4 g, yield: 73%) as a colorless oil:

$^1H$ NMR (400 MHz, $CDCl_3$) δ 7.51 (d, J = 2.4 Hz, 2H), 7.26 (dd, J = 8.6, 2.4 Hz, 2H), 6.98 (d, J = 8.6 Hz, 2H), 3.93 (s, 4H), 1.45 - 1.33 (m, 2H), 1.28 (s, 18H), 1.20 (d, J = 7.3 Hz, 12H).

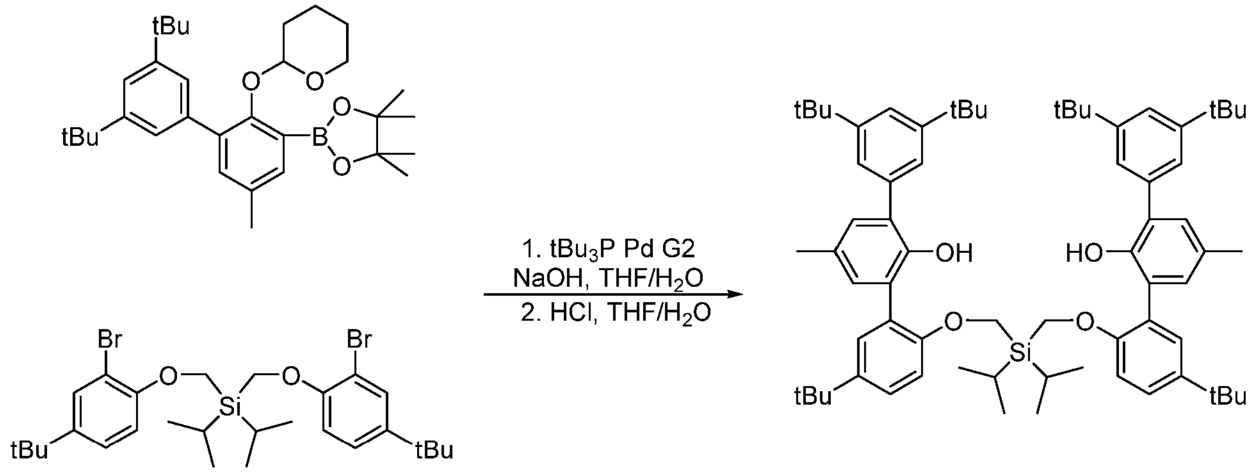


In a glove box, a 40 mL vial equipped with a stir bar was charged with bis((2-bromo-4-t-butylphenoxy)methyl)diisopropylsilane (1.20 g, 2.0 mmol, 1.0 eq), 2-(3',5'-di-tert-butyl-5-methyl-2-((tetrahydro-2H-pyran-2-yl)oxy)-[1,1'-biphenyl]-3-yl)-4,4,5,5-tetramethyl-1,3,2-dioxaborolane (2.54 g, 5.0 mmol, 2.5 eq), $tBu_3P$ Pd G2 (0.031 g, 0.06 mmol, 0.03 eq), THF (3 mL), and NaOH (4 M, 3.0 mL, 12.0 mmol, 6.0 eq). The vial was heated under nitrogen at 55 °C for 2 hours. When completed, the top organic layer was extracted with ether and filtered through a short plug of silica gel and solvents were removed under reduced pressure. The resulting residue was dissolved in THF (10 mL) and MeOH (10 mL). Concentrated HCl (0.5 mL) was then added and the resulting mixture was heated at 75 °C for 2 hours before being cooled to room temperature. The solvents were then removed under reduced pressure and the resulting residue was purified by reverse phase column chromatography using THF/MeCN (0/100 > 100/0) as the eluent, which provided 6",6‴″-(((diisopropylsilanediyl)bis(methylene))bis(oxy))bis(3,3",5-tri-tert-butyl-5'-methyl-[1,1':3',1"-terphenyl]-2'-ol) (1.62 g, yield: 78%) as a white solid:

$^1H$ NMR (400 MHz, $CDCl_3$) δ 7.39 (t, J = 1.8 Hz, 2H), 7.36 (d, J = 1.8 Hz, 4H), 7.29 (d, J = 2.5 Hz, 2H), 7.22 (dd, J = 8.6, 2.6 Hz, 2H), 7.10 (d, J = 2.2 Hz, 2H), 6.94 (d, J = 2.3, 2H), 6.75 (d, J = 8.6 Hz, 2H), 5.37 (s, 2H), 3.61 (s, 4H), 2.32 (d, J = 0.9 Hz, 6H), 1.33 (s, 36H), 1.29 (s, 18H), 0.90 - 0.81 (m, 2H), 0.73 (d, J = 7.1 Hz, 12H).

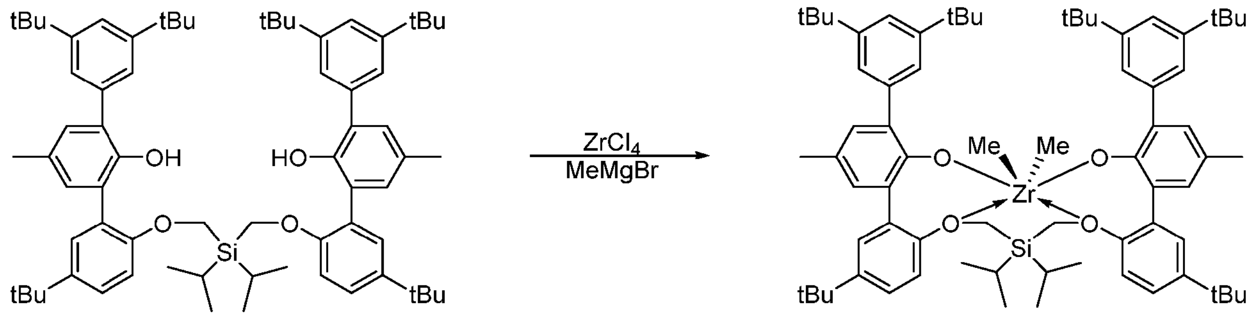


In a glovebox, MeMgBr in diethyl ether (3.00 M, 0.29 mL, 0.86 mmol, 4.3 eq) was added to a -30 °C suspension of $ZrCl_4$ (47 mg, 0.2 mmol, 1.0 eq) in anhydrous toluene (6.0 mL). After stirring for 2 minutes, 6",6‴″-(((diisopropylsilanediyl)bis(methylene))bis(oxy))bis(3,3",5-tri-tert-butyl-5'-methyl-[1,1':3',1"-terphenyl]-2'-ol) (206 mg, 0.2 mmol, 1.0 eq) was added portion wise. The resulting mixture was stirred at room temperature overnight before the solvent was removed under vacuum to afford a dark residue, which was washed with hexanes (10 mL) then extracted with toluene (12mL). After filtering, the toluene extract was dried under vacuum, which provided a metal-ligand complex (170 mg, yield: 74%) as a white solid:

$^1H$ NMR (400 MHz, $C_6D_6$) δ 8.20 - 7.67 (m, 4H), 7.79 (t, J = 1.8 Hz, 2H), 7.56 (d, J = 2.5 Hz, 2H), 7.26 (d, J = 2.4, 2H), 7.21 (d, J = 2.4, 2H), 7.18 (d, J = 2.4, 2H), 5.67 (d, J = 8.6 Hz, 2H), 4.61 (d, J = 13.5 Hz, 2H), 3.46 (d, J = 13.5 Hz, 2H), 2.26 (s, 6H), 1.47 (s, 36H), 1.25 (s, 18H), 0.52 (dd, J = 17.0, 7.5 Hz, 12H), 0.30 - 0.18 (m, 2H), - 0.05 (s, 6H).

***Synthesis of Metal-Ligand Complex 8 (MLC-8)***

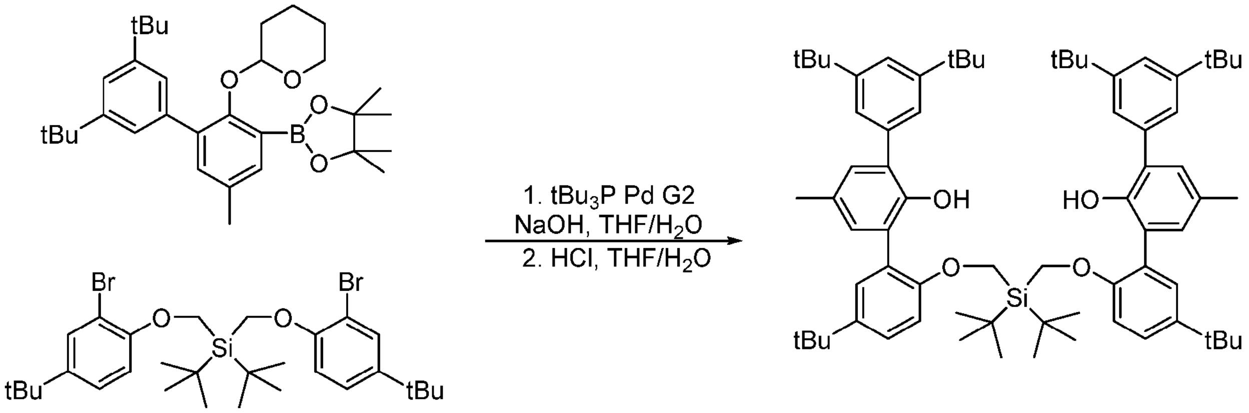


In a glovebox, a 40 mL vial equipped with a stir bar was charged with bis((2-bromo-4-t-butylphenoxy)methyl)di-*t*-butylsilane (0.5 g, 0.80 mmol, 1.0 eq), 2-(3',5'-di-tert-butyl-5-methyl-2-((tetrahydro-2H-pyran-2-yl)oxy)-[1,1'-biphenyl]-3-yl)-4,4,5,5-tetramethyl-1,3,2-dioxaborolane (1.21 g, 2.40 mmol, 3.0 eq), *t*Bu$_3$P Pd G2 (0.012 g, 0.024 mmol, 0.03 eq), THF (2 mL), and KOH (4M, 1.2 mL, 4.8 mmol, 6.0 eq). The vial was heated under nitrogen at 55 °C for 2 hours. When completed, the top organic layer was extracted with ether and filtered through a short plug of silica gel, and solvents were removed under reduced pressure. The resulting residue was dissolved in THF (10 mL) and MeOH (10 mL). Concentrated HCl (0.5 mL) was then added. The resulting mixture was heated at 75 °C for 2 hours before being cooled to room temperature. The solvents were then removed under reduced pressure and the resulting residue was purified by reverse phase column chromatography using THF/MeCN (0/100 > 100/0) as the eluent, which provided 6",6'''''-(((di-*t*-butylsilanediyl)bis(methylene))bis(oxy))bis(3,3",5-tri-tert-butyl-5'-methyl-[1,1':3',1"-terphenyl]-2'-ol) (0.63 g, yield: 75%) as a white solid:

$^1$H NMR (400 MHz, $CDCl_3$) δ 7.39 - 7.37 (m, 2H), 7.36 - 7.34 (m, 2H), 7.25 - 7.22 (m, 2H), 7.10 (d, J = 2.4 Hz, 2H), 6.93 (d, J = 2.3, 2H), 6.83 (d, J = 8.2, 2H), 5.13 (s, 2H), 3.63 (s, 4H), 2.32 (s, 6H), 1.32 (s, 36H), 1.28 (s, 18H), 0.78 (s, 18H).

In a glovebox, MeMgBr in diethyl ether (3 M, 0.281 mL, 0.86 mmol, 4.3 eq) was added to a -30 °C suspension of $ZrCl_4$ (0.046 g, 0.2 mmol, 1.0 eq) in anhydrous toluene (6 mL). After stirring the resulting mixture for 2 minutes, solid 6",6'''''-(((di-*t*-butylsilanediyl)bis(methylene))bis(oxy))bis(3,3",5-tri-tert-butyl-5'-methyl-[1,1':3',1"-terphenyl]-2'-ol) (0.212 g, 0.2 mmol, 1.0 eq) was added portion wise. The resulting mixture was rinsed with toluene (2 mL) and stirred overnight before the solvent was removed under vacuum to afford a dark residue, which was washed with hexanes (10 mL) and filtered before being extracted with toluene (15 mL). The resulting extract was dried under vacuum, which provided a metal-ligand complex (0.2 g, yield: 85%) as a white powder:

$^1$H NMR (400 MHz, $C_6D_6$) δ 7.93 (br s, 2H), 7.79 (t, J = 1.9 Hz, 2H), 7.65 (br s, 2H), 7.63 (d, J = 2.5 Hz, 2H), 7.23 - 7.17 (m, 4H), 7.04 - 6.98 (m, 2H), 5.92 (d, J = 8.6 Hz, 2H), 4.56 (d, J = 13.3 Hz, 2H), 3.45 (d, J = 13.2 Hz, 2H), 2.25 (s, 6H), 1.69 - 1.32 (m, 36H), 1.28 (s, 18H), 0.52 (s, 18H), -0.18 (s, 6H).

***Synthesis of Metal-Ligand Complex 9 (MLC-9)***

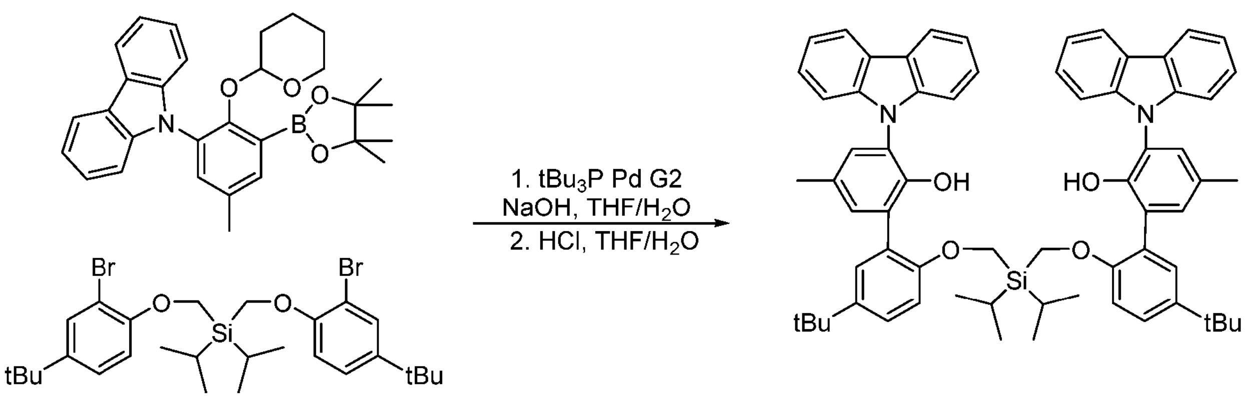

In a glove box, a 40 mL vial equipped with a stir bar was charged with bis((2-bromo-4-t-butylphenoxy)methyl)diisopropylsilane (1.3 g, 2.17 mmol, 1.0 eq), 9-(5-methyl-2-((tetrahydro-2H-pyran-2-yl)oxy)-3-(4,4,5,5-tetramethyl-1,3,2-dioxaborolan-2-yl)phenyl)-9H-carbazole (2.63 g, 5.43 mmol, 2.5 eq), $tBu_3P$ Pd G2 (0.033 g, 0.065 mmol, 0.03 eq), THF (3 mL), and NaOH (4 M, 3.3 mL, 13.0 mmol, 6.0 eq). The vial was heated under nitrogen at 55 °C for 2 hours. When completed, the top organic layer was extracted with ether and filtered through a short plug of silica gel, and solvents were removed under reduced pressure. The resulting residue was dissolved in THF (10 mL) and MeOH (10 mL). Concentrated HCl (0.7 mL) was then added and the resulting mixture was heated at 75 °C for 2 hours before being cooled to room temperature. The solvents were then removed under reduced pressure and the resulting residue was purified by reverse phase column chromatography using THF/MeCN (0/100 > 100/0) as the eluent, which provided 6',6'''-(((diisopropylsilanediyl)bis(methylene))bis(oxy))bis(3-(9H-carbazol-9-yl)-3'-*t*-butyl-5-methyl-[1,1'-biphenyl]-2-ol) (1.62 g, yield: 78%) as a white solid:

$^1$H NMR (400 MHz, $CDCl_3$) δ 8.25 - 8.18 (m, 4H), 7.38 - 7.27 (m, 8H), 7.20 - 7.11 (m, 8H), 7.08 - 7.03 (m, 2H), 6.67 (d, J = 8.5 Hz, 2H), 5.79 (br s, 2H), 5.40 (s, 2H), 3.43 (br s, 4H), 2.32 (s, 6H), 1.21 (s, 18H), 0.89 - 0.80 (m, 2H), 0.77 (d, J = 6.5 Hz, 12H).

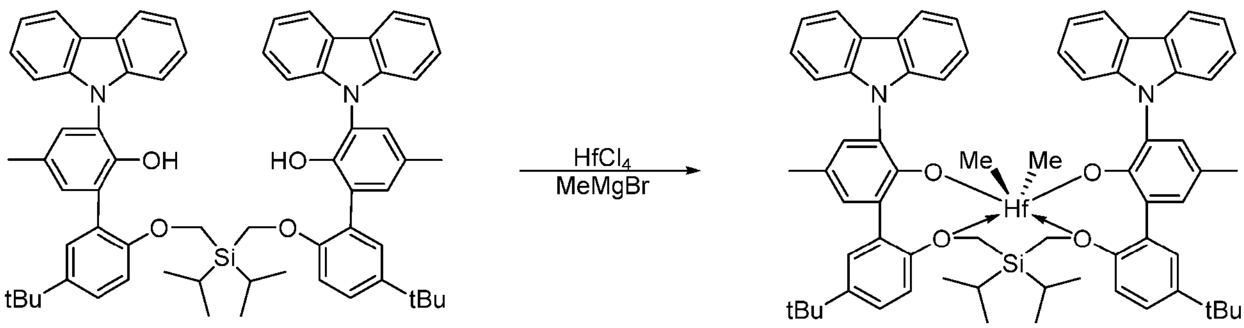


In a glovebox, MeMgBr in diethyl ether (3 M, 0.43 mL, 1.29 mmol, 4.3 eq) was added to a -30 °C suspension of $HfCl_4$ (96 mg, 0.3 mmol, 1.0 eq) in anhydrous toluene (9.0 mL). After stirring the resulting mixture for 2 minutes, solid 6',6'''-(((diisopropylsilanediyl)bis(methylene))bis(oxy))bis(3-(9H-carbazol-9-yl)-3'-t-butyl-5-methyl-[1,1'-biphenyl]-2-ol) (296 mg, 0.3 mmol, 1.0 eq) was added portion wise. The resulting mixture was stirred overnight before the solvent was removed under vacuum to afford a dark residue, which was washed with hexanes (12 mL) and filtered before being extracted with toluene (15 mL). The resulting extract was dried under vacuum, which provided a metal-ligand complex (230 mg, yield: 64%) as a white powder:

$^1$H NMR (400 MHz, $C_6D_6$) δ 8.41 - 8.34 (m, 2H), 8.14 - 8.08 (m, 2H), 7.66 - 7.60 (m, 2H), 7.50 - 7.34 (m, 8H), 7.26 (dd, J = 2.3, 0.7 Hz, 2H), 7.19 (dd, J = 7.1, 1.3 Hz, 2H), 7.10 - 6.98 (m, 6H), 5.18 (d, J = 8.7 Hz, 2H), 4.33 (d, J = 14.0 Hz, 2H), 3.26 (d, J = 14.0 Hz, 2H), 2.16 (d, J = 0.8 Hz, 6H), 1.18 (s, 18H), 0.56 - 0.46 (m, 12H), 0.43 - 0.31 (m, 2H), -1.13 (s, 6H).

***Synthesis of Metal-Ligand Complex 10 (MLC-10)***

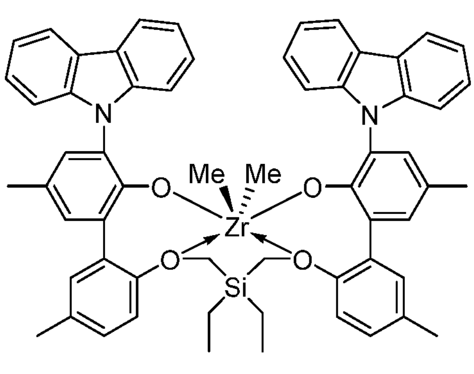

In a glovebox, MeMgBr in diethyl ether (3 M, 0.23 mL, 0.69 mmol) was added to a -35 °C suspension of $ZrCl_4$ (0.040 g, 0.172 mmol) in anhydrous toluene (5 mL). After stirring the resulting mixture for 5 minutes, ligand (described

in International Publication No. WO 2008/033197 A2; 0.150 g, 0.172 mmol) in toluene (5 mL) was added portion wise. The resulting mixture was stirred overnight before the solvent was removed under vacuum to afford a dark residue, which was extracted with a mixture of hexane and toluene (1:1, 10 mL). The resulting extract was filtered and dried under vacuum, which provided a metal-ligand complex (0.165 g, yield: 97%) as a white powder:

$^1$H NMR (400 MHz, Benzene-$d_6$): δ 8.36 - 8.28 (m, 2H), 8.09 (dt, *J* = 7.8, 1.0 Hz, 2H), 7.64 - 7.55 (m, 4H), 7.44 (ddd, *J* = 8.1, 7.2, 1.4 Hz, 2H), 7.38 (td, *J* = 7.4, 1.1 Hz, 2H), 7.25 (ddd, *J* = 8.3, 7.1, 1.2 Hz, 2H), 7.14 - 7.09 (m, 4H), 7.04 - 6.98 (m, 4H), 6.72 (dd, *J* = 8.4, 2.3 Hz, 2H), 5.01 (d, *J* = 8.3 Hz, 2H), 4.27 (d, *J* = 14.1 Hz, 2H), 3.13 (d, *J* = 14.1 Hz, 2H), 2.16 (s, 6H), 1.97 (s, 6H), 0.38 (t, *J* = 8.0 Hz, 6H), 0.02 - -0.28 (m, 4H), -0.87 (s, 6H).

***Synthesis of Metal-Ligand Complex 11 (MLC-11)***

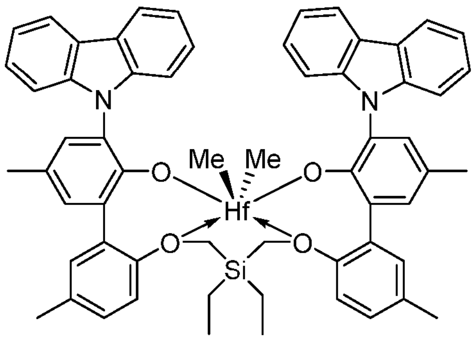

In a glovebox, MeMgBr in diethyl ether (3 M, 0.23 mL, 0.69 mmol) was added to a -35 °C suspension of $HfCl_4$ (0.055 g, 0.172 mmol) in anhydrous toluene (5 mL). After stirring the resulting mixture for 5 minutes, ligand (described in International Publication No. WO 2008/033197 A2; 0.150 g, 0.172 mmol) in toluene (5 mL) was added portion wise. The resulting mixture was stirred overnight before the solvent was removed under vacuum to afford a dark residue, which was extracted with a mixture of hexane and toluene (1:1, 10 mL). The resulting extract was filtered and dried under vacuum, which provided a metal-ligand complex (0.185 g, yield: 100%) as a white powder:

$^1$H NMR (400 MHz, Benzene-$d_6$): δ 8.37 - 8.29 (m, 2H), 8.09 (dt, *J* = 7.6, 1.0 Hz, 2H), 7.61 - 7.55 (m, 2H), 7.53 (dd, *J* = 8.3, 0.9 Hz, 2H), 7.44 (ddd, *J* = 8.2, 7.1, 1.4 Hz, 2H), 7.38 (td, *J* = 7.4, 1.1 Hz, 2H), 7.24 (ddd, *J* = 8.3, 7.1, 1.3 Hz, 2H), 7.14 - 7.09 (m, 4H), 7.04 - 6.98 (m, 4H), 6.73 (dd, *J* = 8.4, 2.3 Hz, 2H), 5.02 (d, *J* = 8.3 Hz, 2H), 4.36 (d, *J* = 14.2 Hz, 2H), 3.19 (d, *J* = 14.2 Hz, 2H), 2.16 (s, 6H), 1.97 (s, 6H), 0.37 (t, *J* = 8.0 Hz, 6H), -0.01 - -0.27 (m, 4H), -1.09 (s, 6H).

***Production of Catalyst Systems***

Various catalyst systems were produced via spray drying. Specifically, fumed silica (commercially available as CAB-O-SIL® from Cabot Corporation) and methylaluminoxane (10 wt.% in toluene) were dissolved in toluene and mixed for 15 minutes. A metal-ligand complex was added to the resulting slurry and mixed for an additional 30 to 60 minutes. The resulting catalyst system precursor was then dried using a spray dryer (commercially available as Mini Spray Dryer B-290 from BUCHI Corporation) with an inlet temperature of 185 °C, an outlet temperature of 100 °C, an aspirator speed of 95 rotations per minute (rpm), and a pump speed of 150 rpm.

The structures of the different metal-ligand complexes are reported in Table 1. The specific metal-ligand complex, as well as the amounts of each component, used to produce each catalyst system are reported in Table 2.

**Table 1**

| ***Metal-Ligand*** **Complex** | **Structure** |
|---|---|
| CMLC-1 | 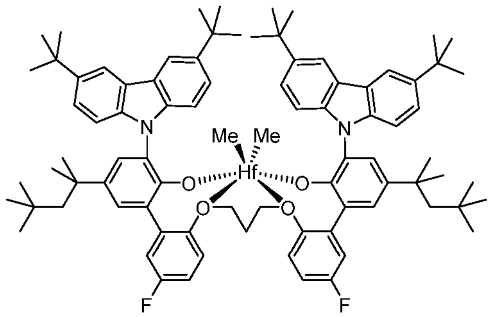 |
| CMLC-2 | 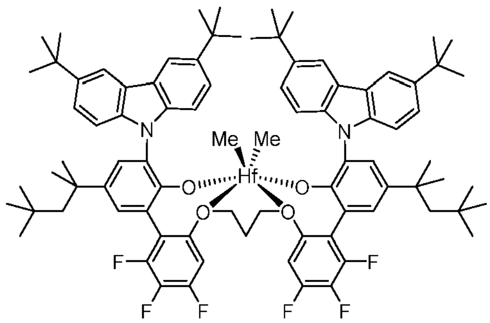 |
| CMLC-3 | 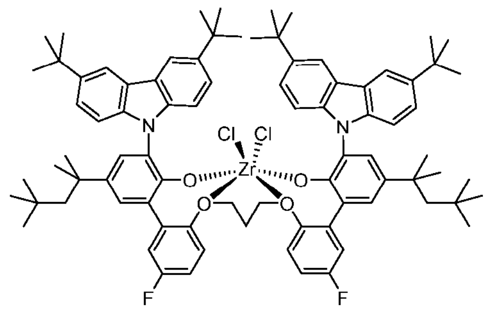 |
| CMLC-4 | 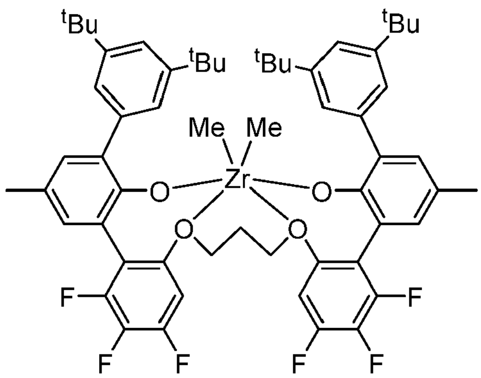 |

(continued)

| ***Metal-Ligand* Complex** | **Structure** |
|---|---|
| CMLC-5 | 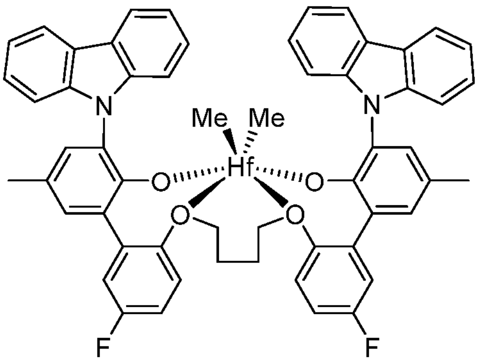 |
| CMLC-6 | 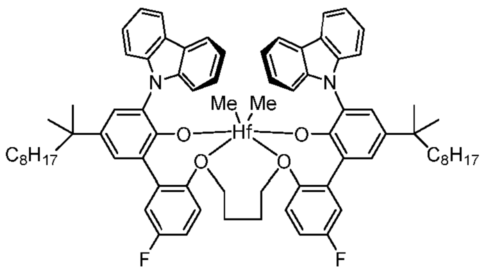 |
| MLC-1 | 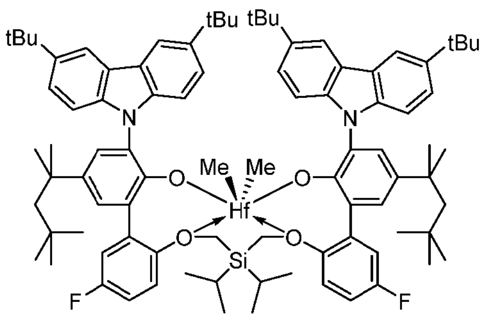 |
| MLC-2 | 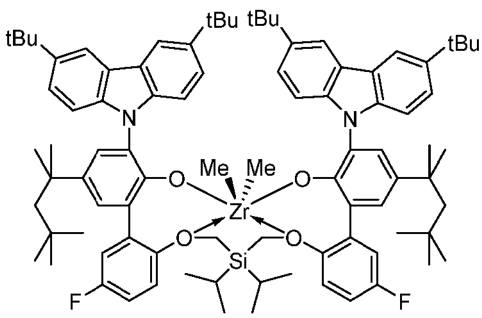 |
| MLC-3 | 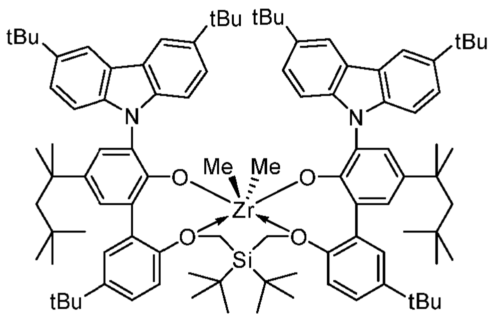 |

(continued)

| ***Metal-Ligand*** **Complex** | **Structure** |
|---|---|
| MLC-4 | 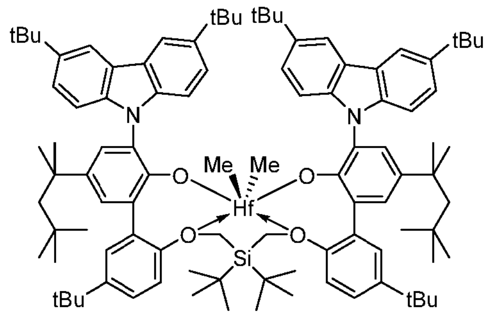 |
| MLC-5 | 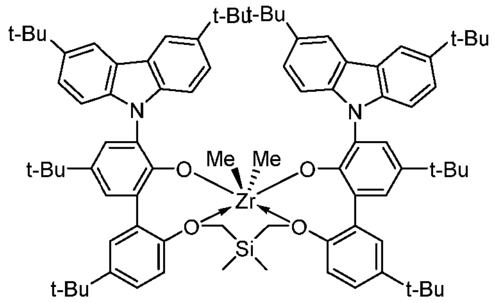 |
| MLC-6 | 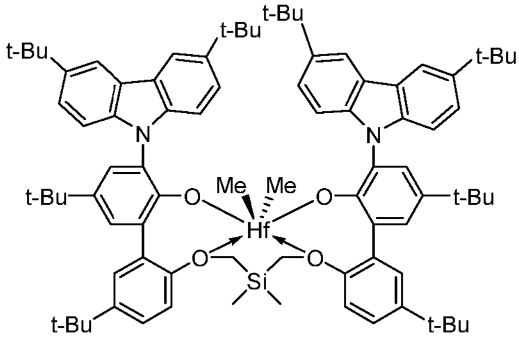 |
| MLC-7 | 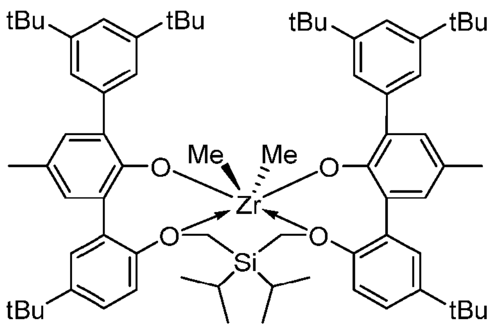 |

(continued)

| ***Metal-Ligand* Complex** | **Structure** |
|---|---|
| MLC-8 | 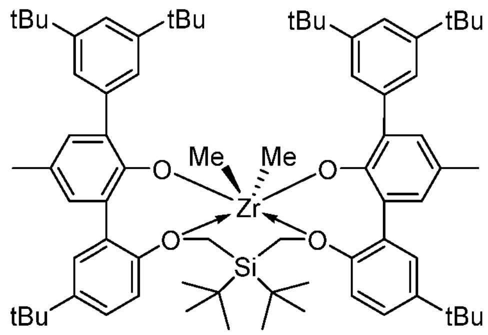 |
| MLC-9 | 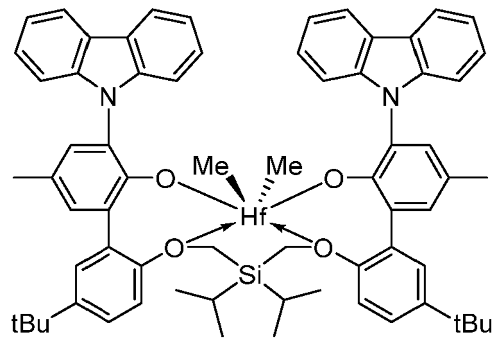 |
| MLC-10 | 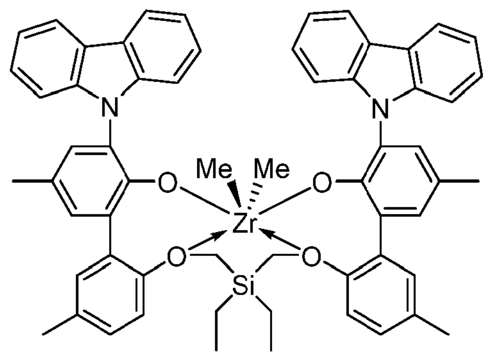 |
| MLC-11 | 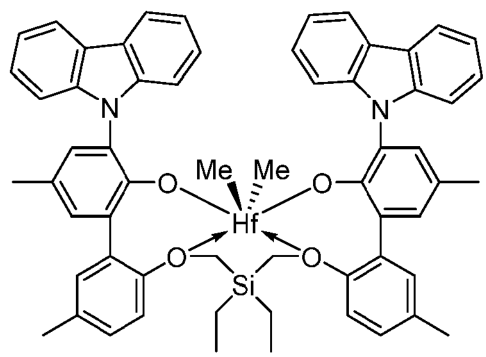 |

Table 2

| Catalyst System | Metal-Ligand Complex | Mass of Metal-Ligand Complex (g) | Mass of Fumed Silica (g) | Mass of MAO (g) | Mass of Toluene (g) |
|---|---|---|---|---|---|
| Comparative Sample 1 | CMLC-1 | 0.161 | 1.325 | 11.0 | 37.5 |
| Comparative Sample 2 | CMLC-2 | 0.101 | 0.795 | 6.6 | 22.5 |
| Comparative Sample 3 | CMLC-3 | 0.186 | 1.590 | 13.2 | 45.0 |
| Comparative Sample 4 | CMLC-4 | 0.070 | 0.795 | 6.6 | 22.5 |
| Comparative Sample 5 | CMLC-5 | 0.070 | 1.325 | 11.0 | 37.5 |
| Comparative Sample 6 | CMLC-6 | 0.089 | 1.325 | 11.0 | 37.5 |
| Sample 1 | MLC-1 | 0.103 | 0.795 | 6.6 | 22.5 |
| Sample 2 | MLC-2 | 0.081 | 0.750 | 6.5 | 21.0 |
| Sample 3 | MLC-2 | 0.042 | 0.820 | 6.7 | 22.0 |
| Sample 4 | MLC-3 | 0.082 | 0.700 | 6.2 | 20.0 |
| Sample 5 | MLC-4 | 0.087 | 0.700 | 6.2 | 20.0 |
| Sample 6 | MLC-5 | 0.065 | 0.640 | 5.7 | 18.0 |
| Sample 7 | MLC-6 | 0.070 | 0.640 | 5.7 | 18.0 |
| Sample 8 | MLC-7 | 0.063 | 0.750 | 6.4 | 21.0 |
| Sample 9 | MLC-8 | 0.069 | 0.800 | 6.8 | 22.0 |
| Sample 10 | MLC-9 | 0.070 | 0.800 | 6.9 | 22.0 |
| Sample 11 | MLC-10 | 0.051 | 0.700 | 6.0 | 19.0 |
| Sample 12 | MLC-11 | 0.055 | 0.700 | 6.0 | 19.0 |

***Production of Polyethylene***

Various polyethylene samples were produced by contacting ethylene and 1-hexene with the catalyst systems reported in Table 2 in a gas-phase polymerization reactor. Specifically, a gas-phase polymerization reactor (*i.e.,* a 2-liter, stainless steel autoclave equipped with a mechanical agitator) was dried for 1 hour, charged with sodium chloride (200 grams), and dried again at 100 °C under nitrogen for 30 minutes. Supported methylaluminoxane (SMAO; 3 grams) was then introduced to the reactor under nitrogen pressure, the reactor was sealed, and the components were stirred. The reactor was then charged with hydrogen and 1-hexene pressurized with ethylene. Once steady state operation was achieved, a catalyst system was charged into the reactor at 80 °C to initiate polymerization. The reactor was then heated to a desired reaction temperature and maintained for a desired run time. After the run was complete, the reactor was cooled, vented, and opened. The resulting poly(ethylene-co-1-hexene) copolymer was collected, washed with water and methanol, and dried.

The reaction conditions used for each run are reported in Table 3. The reactor data for each run are reported in Table 4. The properties of the poly(ethylene-co-1-hexene) copolymer produced by each run are reported in Table 5.

Table 3

| Condition | Temperature ($^0$C) | $C_6/C_2$ Ratio | $H_2/C_2$ Ratio | $C_2$ Partial Pressure (psi) | Run Time (hours) |
|---|---|---|---|---|---|
| 1 | 90 | 0.016 | 0.0011 | 220 | 1 |
| 2 | 100 | 0.004 | 0.0068 | 230 | 1 |

(continued)

| Condition | Temperature ($^0C$) | $C_6/C_2$ Ratio | $H_2/C_2$ Ratio | $C_2$ Partial Pressure (psi) | Run Time (hours) |
|---|---|---|---|---|---|
| 3 | 90 | 0.003 | 0.0040 | 100 | 1 |

Table 4

| Run | Catalyst System | Condition | Catalyst Charge (mg) | Yield (g) | Productivity (gPE/ gcat/hr) | Uptake Ratio |
|---|---|---|---|---|---|---|
| 1 | Comparative Sample 1 | 1 | 20.3 | 38.59 | 1,901 | 0.352 |
| 2 | Comparative Sample 2 | 1 | 101.3 | 0.00 | 0 | - |
| 3 | Comparative Sample 3 | 1 | 10.7 | 69.60 | 6,504 | 0.234 |
| 4 | Sample 1 | 1[a] | 9.9 | 113.58 | 16,872 | 0.193 |
| 5 | Sample 2 | 1 | 3.6 | 299.80 | 83,276 | 0.162 |
| 6 | Sample 3 | 1 | 3.1 | 207.40 | 66,902 | 0.309 |
| 7 | Sample 4 | 1 | 2.9 | 32.79 | 11,308 | 0.317 |
| 8 | Sample 5 | 1 | 6.0 | 163.00 | 27,166 | 0.250 |
| 9 | Sample 6 | 1 | 6.4 | 237.00 | 37,031 | 0.121 |
| 10 | Sample 7 | 1 | 6.0 | 96.59 | 16,099 | 0.263 |
| 11 | Comparative Sample 4 | 1 | 100.3 | 65.07 | 649 | 0.444 |
| 12 | Sample 8 | 1 | 6.0 | 228.20 | 38,033 | 0.126 |
| 13 | Sample 9 | 1 | 6.0 | 61.00 | 10,166 | 0.126 |
| 14 | Comparative Sample 5 | 1 | 10.1 | 30.60 | 3,030 | 0.299 |
| 15 | Comparative Sample 6 | 1 | 10.6 | 35.40 | 3,339 | 0.275 |
| 16 | Sample 9 | 1 | 3.0 | 126.00 | 41,998 | 0.218 |
| 17 | Sample 11 | 1 | 6.1 | 147.80 | 24,229 | 0.108 |
| 18 | Sample 12 | 1 | 6.4 | 111.40 | 17,406 | 0.220 |
| 19 | Comparative Sample 1 | 2 | 10.5 | 25.60 | 2,438 | 0.097 |
| 20 | Comparative Sample 2 | 2 | 100.3 | 1.40 | 14 | 0.063 |
| 21 | Comparative Sample 3 | 2 | 11.4 | 69.00 | 6,052 | 0.042 |
| 22 | Sample 1 | 2 | 10.0 | 106.20 | 10,618 | 0.047 |
| 23 | Sample 2 | 2 | 3.2 | 97.00 | 30,312 | 0.058 |
| 24 | Sample 3 | 2 | 3.0 | 74.80 | 24,932 | 0.059 |
| 25 | Sample 4 | 2 | 3.4 | 179.40 | 52,764 | 0.016 |
| 26 | Sample 5 | 2 | 6.6 | 203.00 | 30,757 | 0.046 |

(continued)

| Run | Catalyst System | Condition | Catalyst Charge (mg) | Yield (g) | Productivity (gPE/ gcat/hr) | Uptake Ratio |
|---|---|---|---|---|---|---|
| 27 | Sample 6 | 2 | 6.0 | 135.20 | 22,533 | 0.039 |
| 28 | Sample 7 | 2 | 6.2 | 105.60 | 17,032 | 0.037 |
| 29 | Comparative Sample 4 | 2 | 101.4 | 36.79 | 363 | 0.116 |
| 30 | Sample 8 | 2 | 3.5 | 232.00 | 66,285 | 0.035 |
| 31 | Sample 9 | 2 | 6.4 | 219.00 | 34,219 | 0.029 |
| 32 | Comparative Sample 5 | 2 | 10.0 | 18.80 | 1,880 | 0.049 |
| 33 | Comparative Sample 6 | 2 | 10.7 | 34.60 | 3,233 | 0.062 |
| 34 | Sample 10 | 2 | 3.2 | 84.40 | 26,375 | 0.053 |
| 35 | Sample 11 | 2 | 6.8 | 120.20 | 17,676 | 0.043 |
| 36 | Sample 12 | 2 | 6.1 | 207.00 | 33,934 | 0.035 |
| [a] Run time was 0.68 hours. | | | | | | |

**Table 5**

| Polymer | Run | Number Average Molecular Weight (Mn) (g/mol) | Weight Average Molecular Weight (Mw) (g/mol) | Z-Average Molecular Weight (Mz) (g/mol) | Molecular Weight Distribution (Mw/Mn) | C6 (wt.%; corrected) |
|---|---|---|---|---|---|---|
| 1 | 1 | 240,753 | 547,803 | 1,072,132 | 2.28 | 33.69 |
| 2 | 2 | - | - | - | - | - |
| 3 | 3 | 34,855 | 298,450 | 6,430,772 | 8.56 | 23.97 |
| 4 | 4 | - | - | - | - | - |
| 5 | 5 | 93,254 | 322,295 | 1,792,326 | 3.46 | 22.38 |
| 6 | 6 | 65,881 | 189,177 | 1,015,759 | 2.87 | 34.15 |
| 7 | 7 | 394,420 | 1,098,602 | 2,541,016 | 2.79 | 36.30 |
| 8 | 8 | 1,308,074 | 4,015,719 | 5,914,104 | 3.07 | 24.56 |
| 9 | 9 | 99,368 | 274,080 | 1,075,997 | 2.76 | 12.65 |
| 10 | 10 | 1,251,940 | 2,947,395 | 6,235,727 | 2.35 | 21.61 |
| 11 | 11 | - | - | - | - | - |
| 12 | 12 | 1,168,300 | 2,770,712 | 4,762,309 | 2.37 | 16.72 |
| 13 | 13 | 1,982,681 | 3,940,927 | 5,654,021 | 1.99 | 15.13 |
| 14 | 14 | 443,250 | 1,422,312 | 3,611,631 | 3.21 | 28.05 |
| 15 | 15 | 406,942 | 1,262,083 | 2,917,624 | 3.10 | 28.27 |
| 16 | 16 | 736,828 | 2,243,306 | 4,320,120 | 3.04 | 28.53 |
| 17 | 17 | 125,367 | 495,124 | 2,811,167 | 3.95 | 8.13 |
| 18 | 18 | 500,045 | 1,985,408 | 5,463,058 | 3.97 | 22.70 |

(continued)

| Polymer | Run | Number Average Molecular Weight (Mn) (g/mol) | Weight Average Molecular Weight (Mw) (g/mol) | Z-Average Molecular Weight (Mz) (g/mol) | Molecular Weight Distribution (Mw/Mn) | C6 (wt.%; corrected) |
|---|---|---|---|---|---|---|
| 19 | 19 | 296,915 | 694,880 | 1,294,183 | 2.34 | 10.72 |
| 20 | 20 | - | - | - | - | - |
| 21 | 21 | 42,586 | 524,854 | 2,935,115 | 12.32 | 5.70 |
| 22 | 22 | 12,180 | 166,613 | 671,978 | 13.68 | 8.69 |
| 23 | 23 | 149,251 | 560,785 | 2,378,836 | 3.76 | 8.31 |
| 24 | 24 | 140,994 | 476,244 | 1,937,327 | 3.38 | 8.94 |
| 25 | 25 | 657,749 | 1,536,174 | 2,915,445 | 2.34 | 7.15 |
| 26 | 26 | 1,316,183 | 3,510,257 | 5,599,026 | 2.67 | 7.95 |
| 27 | 27 | 136,945 | 648,131 | 4,088,997 | 4.73 | 3.63 |
| 28 | 28 | 726,631 | 1,785,436 | 4,212,893 | 2.46 | 3.72 |
| 29 | 29 | - | - | - | - | - |
| 30 | 30 | 588,402 | 1,414,271 | 2,869,978 | 2.40 | 5.34 |
| 31 | 31 | 914,993 | 1,983,057 | 3,509,826 | 2.17 | 4.51 |
| 32 | 32 | 362,138 | 1,242,309 | 3,044,292 | 3.43 | 6.67 |
| 33 | 33 | 360,676 | 1,094,521 | 2,638,737 | 3.03 | 8.44 |
| 34 | 34 | 648,838 | 1,740,639 | 3,476,752 | 2.68 | 8.09 |
| 35 | 35 | 155,423 | 643,005 | 4,302,110 | 4.14 | 2.87 |
| 36 | 36 | 363,211 | 1,095,006 | 3,898,071 | 3.01 | 4.13 |

As indicated by Tables 4 and 5, catalyst systems that included a silyl-bridged metal-ligand complex were more productive (*i.e.,* produced a greater amount of polymer) than catalyst systems that included carbon-bridged *(i.e.,* bridges that contain only carbon connecting atoms) metal-ligand complexes. Put more simply, the catalyst systems of the present disclosure provided a higher productivity than comparative catalyst systems.

The effect of the bridge of the metal-ligand complex on the catalyst system is more clearly indicated when comparing catalyst systems that included metal-ligand complexes that have similar "top groups" (*i.e.*, $R^1$ and $R^{16}$ of formula (I)). For example, Runs 1-10 were each conducted under Condition 1 and used catalyst systems that included metal-ligand complexes that have 3,6-*t*$Bu_2$-carbazolyl as both top groups. However, Runs 1-3, which used Comparative Samples 1-3, had productivities from 0 gPE/gcat/hr (*i.e.,* inactive) to 6,504 gPE/gcat/hr. In contrast, Runs 4-10, which used Samples 1-7, had productivities from 11,308 gPE/gcat/hr to 83,276 gPE/gcat/hr. Similarly, Runs 19-28 were each conducted under Condition 2 and used catalyst systems that included metal-ligand complexes that have 3,6-*t*$Bu_2$-carbazolyl as both top groups. However, Runs 19-21, which used Comparative Samples 1-3, had productivities from 14 gPE/gcat/hr to 6,052 gPE/gcat/hr. In contrast, Runs 22-28, which used Samples 1-7, had productivities from 10,618 gPE/gcat/hr to 52,764 gPE/gcat/hr.

Runs 1, 2, 4, 8, and 10 were each conducted under Condition 1 and used catalyst systems including hafnium-based metal-ligand complexes having 3,6-*t*$Bu_2$-carbazolyl as both top groups. However, Runs 1 and 2, which used Comparative Samples 1 and 2, had productivities of 0 gPE/gcat/hr and 1,901 gPE/gcat/hr. In contrast, Runs 4, 8, and 10, which used Samples 1, 5, and 7, had productivities from 16,872 gPE/gcat/hr to 27,166 gPE/gcat/hr. Indeed, Tables 4 and 5 indicate similar trends when comparing Runs 3, 5-7, and 9, which were each conducted under Condition 1 and used catalyst systems including zirconium-based metal-ligand complexes having 3,6-*t*$Bu_2$-carbazolyl as both top groups; Runs 19, 20, 22, 26, and 28, which were each conducted under Condition 2 and used catalyst systems including hafnium-based metal-ligand complexes having 3,6-*t*$Bu_2$-carbazolyl as both top groups; and Runs 21, 23-25, and 27, which were each conducted under Condition 2 and used catalyst systems including zirconium-based metal-ligand complexes having 3,6-*t*$Bu_2$-carbazolyl as both top groups.

Run 1 was conducted under Condition 1 and used Comparative Sample 1, and Run 4 was conducted under Condition 1 and used Sample 1. The only differences between the metal-ligand complexes of Comparative Sample 1 and Sample 1 were the bridges. Specifically, the metal-ligand complex of Comparative Sample 1 had a $-CH_3CH_3CH_3-$ bridge and the metal-ligand complex of Sample 1 had a $-CH_2Si(i Pr)_2CH_2-$ bridge. However, Run 1 had a productivity of only 1,901 gPE/gcat/hr, while Run 4 had a productivity of 16,872 gPE/gcat/hr.

Run 19 was conducted under Condition 2 and used Comparative Sample 1, and Run 22 was conducted under Condition 2 and used Sample 1. Similar to the comparison between Runs 1 and 4, the only differences between the runs were the bridges of the metal-ligand complexes. Specifically, the metal-ligand complex used in Run 19 had a $-CH_3CH_3CH_3-$ bridge and the metal-ligand complex used in Run 22 had a $-CH_2Si(i Pr)_2CH_2-$ bridge. However, Run 19 had a productivity of only 2,438 gPE/gcat/hr, while Run 22 had a productivity of only 10,618 gPE/gcat/hr.

***Comparison of Catalyst Systems***

Various catalyst systems reported in Table 2, which include metal-ligand complexes having similar structures, were utilized to produce polymers in a manner consistent with the runs previously described. The reaction conditions for each run are reported in Table 6. The reactor data for each run are reported in Table 7.

**Table 6**

| Condition | Temperature (°C) | $C_6/C_2$ Ratio | $C_2$ Partial Pressure (psi) | Run Time (h) |
|---|---|---|---|---|
| A | 90 | 0.016 | 220 | 1 |
| B | 90 | 0.004 | 230 | 1 |
| C | 90 | 0.001 | 230 | 1 |
| D | 90 | 0 | 230 | 1 |
| E | 90 | 0.002 | 220 | 1 |

**Table 7**

| Run | Catalyst System | Condition | $H_2/C_2$ Ratio | Catalyst Charge (mg) | Yield (g) | Productivity (gPE/ gcat/hr) |
|---|---|---|---|---|---|---|
| 37 | Sample 1 | A | 0.0011 | 9.9 | 113.58 | 16,872 |
| 38 | Sample 1 | B | 0.0040 | 10.3 | 104.40 | 10,136 |
| 39 | Sample 1 | C | 0.0016 | 3.1 | 85.80 | 27,676 |
| 40 | Sample 1 | D | 0.0100 | 3.5 | 109.60 | 31,313 |
| 41 | Comparative Sample 1 | A | 0.0011 | 20.3 | 38.59 | 1,901 |
| 42 | Comparative Sample 1 | B | 0.0068 | 10.5 | 25.60 | 2,438 |
| 43 | Comparative Sample 1 | E | 0.0016 | 11.4 | 31.79 | 2,789 |
| 44 | Comparative Sample 1 | D | 0.0016 | 10.1 | 87.39 | 8,653 |
| 45 | Comparative Sample 5 | A | 0.0011 | 10.0 | 18.80 | 1,880 |
| 46 | Comparative Sample 5 | B | 0.0068 | 10.2 | 10.40 | 1,020 |
| 47 | Comparative Sample 3 | A | 0.0068 | 10.0 | 69.60 | 6,504 |

(continued)

| Run | Catalyst System | Condition | $H_2/C_2$ Ratio | Catalyst Charge (mg) | Yield (g) | Productivity (gPE/ gcat/hr) |
|---|---|---|---|---|---|---|
| 48 | Comparative Sample 3 | B | 0.0011 | 10.2 | 69.00 | 6,052 |

As indicated by Table 7, catalyst systems that included a silyl-bridged metal-ligand complex were more productive than catalyst systems including carbon-bridged metal-ligand complexes. Specifically, Sample 1 and Comparative Sample 1 both included metal-ligand complexes having a 3-atom bridge. However, the bridge of the metal-ligand complex of Sample 1 included a silicon atom, while the bridge of the metal-ligand complex of Comparative Sample 1 included only carbon atoms. As a result of this one difference, the runs using Sample 1 were significantly more productive at every reaction condition than the runs using Comparative Sample 1. Similar comparisons can be made between Sample 1 and Comparative Samples 3 and 5. However, it should be noted that the samples should be compared under similar reaction conditions. For example, while Run 44 had a productivity relatively similar to Run 38, Run 44 was conducted without 1-hexene.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 $g/cm^3$" is intended to mean "about 40 $g/cm^3$."

Notations used in the equations included herein refer to their standard meaning as understood in the field of mathematics. For example, "=" means equal to, "×" denotes the multiplication operation, "+" denotes the addition operation, "-" denotes the subtraction operation, ">" is a "greater than" sign, "<" is a "less than" sign, "and "/" denotes the division operation.

Every document cited herein, if any, including any cross-referenced or related patent or patent application and any patent or patent application to which this application claims priority or benefit thereof, is incorporated by reference in its entirety unless expressly excluded or otherwise limited. The citation of any document is not an admission that it is prior art with respect to any embodiment disclosed or claimed, or that it alone, or in any combination with any other reference or references, teaches, suggests, or discloses any such embodiment. Further, to the extent that any meaning or definition of a term in this document conflicts with any meaning or definition of the same term in a document incorporated by reference, the meaning or definition assigned to that term in this document shall govern.

The present invention will now be described in relation to the following non-limiting clauses:

1. A procatalyst comprising a metal-ligand complex disposed on one or more support materials, wherein the metal-ligand complex has a structure according to formula (I):

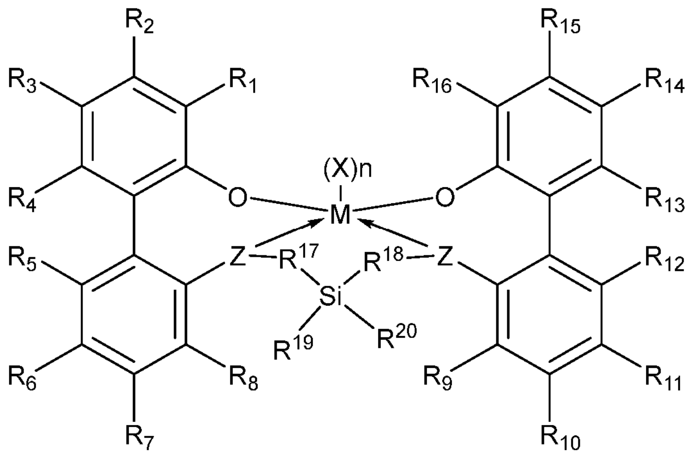

(I)

wherein:

M is titanium, zirconium, or hafnium;
n is 1, 2, or 3;
each X is a monodentate ligand independently chosen from unsaturated ($C_2$-$C_{50}$)hydrocarbon, unsaturated

($C_2$-$C_{50}$)heterohydrocarbon, ($C_1$-$C_{50}$)hydrocarbyl, (Ci-$C_{50}$)heterohydrocarbyl, ($C_6$-$C_{50}$)aryl, ($C_4$-$C_{50}$)heteroaryl, halogen, -N($R^N$)$_2$, and -N($R^N$)COR$^C$;
the metal-ligand complex is overall charge-neutral;
each Z is independently chosen from -O-, -S-, ($C_6$-$C_{50}$)aryl, ($C_4$-$C_{50}$)heteroaryl, N($C_1$-$C_{50}$)hydrocarbyl, and P($C_1$-$C_{50}$)hydrocarbyl;
$R^1$ and $R^{16}$ are independently chosen from ($C_6$-$C_{50}$)aryl, ($C_4$-$C_{50}$)heteroaryl, ($C_1$-$C_{50}$)alkyl, ($C_3$-$C_{40}$)heteroalkyl, radicals having formula (II), radicals having formula (III), and radicals having formula (IV):

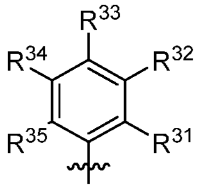
(II)
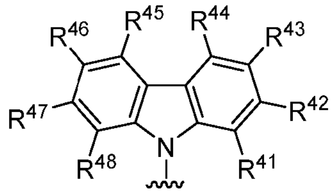
(III)
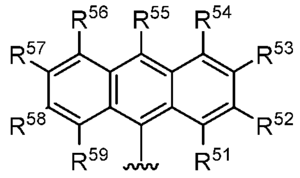
(IV)

wherein $R^{31-35}$, $R^{41-48}$, and $R^{51-59}$ are independently chosen from -H, ($C_1$-$C_{50}$)hydrocarbyl, ($C_1$-$C_{50}$)heterohydrocarbyl, -Si($R^C$)$_3$, -Ge($R^C$)$_3$, -P($R^P$)$_2$, -N($R^N$)$_2$, -OR$^C$, -SR$^C$, -$NO_2$, -CN, -$CF_3$, $R^C$S(O)-, $R^C$S(O)$_2$-, ($R^C$)$_2$C=N-, $R^C$C(O)O-, $R^C$OC(O)-, $R^C$C(O)N($R^N$)-, ($R^C$)$_2$NC(O)-, or halogen;
$R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, ($C_1$-$C_{50}$)hydrocarbyl, (Ci-$C_{50}$)heterohydrocarbyl, -Si($R^C$)$_3$, -Ge($R^C$)$_3$, -P($R^P$)$_2$, -N($R^N$)$_2$, -OR$^C$, -SR$^C$, -$NO_2$, -CN, -$CF_3$, $R^C$S(O)-, $R^C$S(O)$_2$-, ($R^C$)$_2$C=N-, $R^C$C(O)O-, $R^C$OC(O)-, $R^C$C(O)N(R)-, ($R^c$)$_2$NC(O)-, and halogen;
$R^{17}$ and $R^{18}$ are independently chosen from -($CR^C_2$)$_m$- , wherein subscript m is from 1 to 10;
$R^{19}$ and $R^{20}$ are independently chosen from linear or branched ($C_1$-$C_{20}$)alkyl; and
each $R^C$, $R^P$, and $R^N$ are independently chosen from -H, ($C_1$-$C_{50}$)hydrocarbyl, and ($C_1$-$C_{50}$)heterohydrocarbyl.

2. The procatalyst of clause 1, wherein $R^1$ and $R^{16}$ are the same.

3. The procatalyst of either clause 1 or 2, wherein at least one of $R^1$ and $R^{16}$ is a radical having formula (II) and at least one of $R^{32}$ and $R^{34}$ is *tert*-butyl.

4. The procatalyst of either clause 1 or 2, wherein at least one of $R^1$ and $R^{16}$ is a radical having formula (III).

5. The procatalyst of clause 4, wherein at least one of $R^{42}$, $R^{43}$, $R^{46}$, and $R^{47}$ is *tert*-butyl.

6. The procatalyst of clause 5, wherein $R^{41-48}$ are -H,

7. The procatalyst of any of clauses 1-7, wherein the one or more support materials comprise fumed silica.

8. A catalyst system comprising the procatalyst of any of clauses 1-6 and one or more activators,

9. The catalyst system of clause 7, wherein the activator comprises methylalumoxane (MAO).

10. A method for producing a catalyst system, the method comprising:
contacting one or more support materials, one or more activators, and a metal-ligand complex in an inert hydrocarbon solvent to produce the catalyst system, wherein the metal-ligand complex has a structure according to formula (Ia):

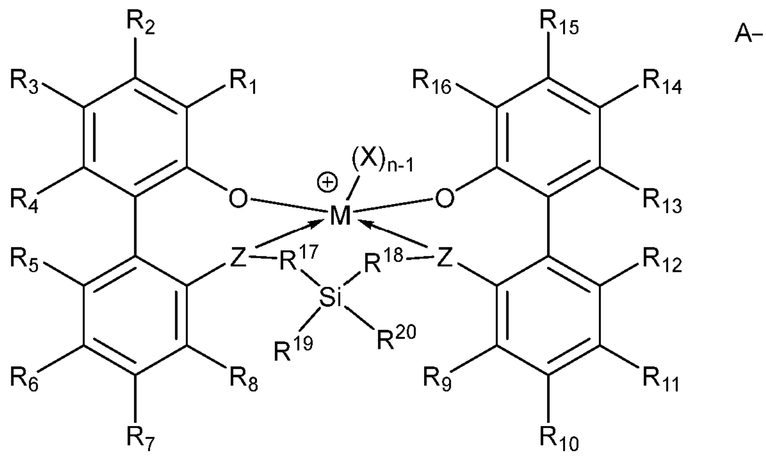

(Ia)

wherein:

$A^-$ is an anion;
M is titanium, zirconium, or hafnium;
n is 1, 2, or 3;
each X is a monodentate ligand independently chosen from unsaturated $(C_2\text{-}C_{50})$hydrocarbon, unsaturated $(C_2\text{-}C_{50})$heterohydrocarbon, $(C_1\text{-}C_{50})$hydrocarbyl, $(C_1\text{-}C_{50})$heterohydrocarbyl, $(C_6\text{-}C_{50})$aryl, $(C_4\text{-}C_{50})$heteroaryl, halogen, $-N(R^N)_2$, and $-N(R^N)COR^C$;
each Z is independently chosen from -O-, -S-, $(C_6\text{-}C_{50})$aryl, $(C_4\text{-}C_{50})$heteroaryl, $N(C_1\text{-}C_{40})$hydrocarbyl, and $P(C_1\text{-}C_{40})$hydrocarbyl;
$R^1$ and $R^{16}$ are independently chosen from $(C_6\text{-}C_{50})$aryl, $(C_4\text{-}C_{50})$heteroaryl, $(C_1\text{-}C_{40})$alkyl, $(C_3\text{-}C_{40})$heteroalkyl, radicals having formula (II), radicals having formula (III), and radicals having formula (IV):

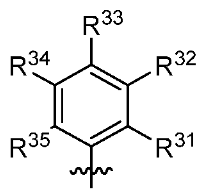
(II)
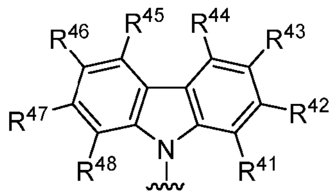
(III)
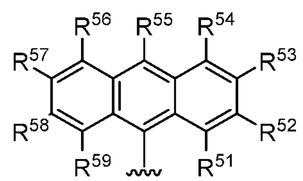
(IV)

wherein $R^{31\text{-}35}$, $R^{41\text{-}48}$, and $R^{51\text{-}59}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R^N)$-, $(R^C)_2NC(O)$-, or halogen;
$R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R)$-, $(R^C)_2NC(O)$-, and halogen;
$R^{17}$ and $R^{18}$ are independently chosen from $-(CR^C_2)_m$-, wherein subscript m is from 1 to 10;
$R^{19}$ and $R^{20}$ are independently chosen from linear or branched $(C_1\text{-}C_{20})$alkyl; and
each $R^C$, $R^P$, and $R^N$ are independently chosen from -H, $(C_1\text{-}C_{50})$hydrocarbyl, and $(C_1\text{-}C_{50})$heterohydrocarbyl.

11. The method of clause 10, wherein the activator comprises methylalumoxane (MAO).

12. The method of either clause 10 or 11, wherein the method further comprises:

mixing the one or more support materials, the one or more activators, and the metal-ligand complex in the inert hydrocarbon solvent to produce a catalyst system precursor; and
drying the catalyst system precursor to produce the catalyst system.

13. The method of clause 12, wherein the catalyst system precursor is spray dried to produce the catalyst system; and the catalyst system comprises spray-dried particles.

14. The method of either clause 10 or 11, wherein the method further comprises:

disposing the one or more activators on the one or more support materials to produce a supported activator; and contacting the supported activator with a solution of the metal-ligand complex in the inert hydrocarbon solvent.

15. The method of clause 14, wherein disposing the one or more activators on the one or more support materials comprises spray drying to produce a spray-dried supported activator.

16. A process for producing polyethylene, the process comprising contacting ethylene and, optionally, one or more $(C_3\text{-}C_{12})\alpha$-olefin comonomers with a catalyst system in a gas-phase polymerization reactor, wherein the catalyst system comprises a metal-ligand complex disposed on one or more support materials; and the metal-ligand complex has a structure according to formula (Ia):

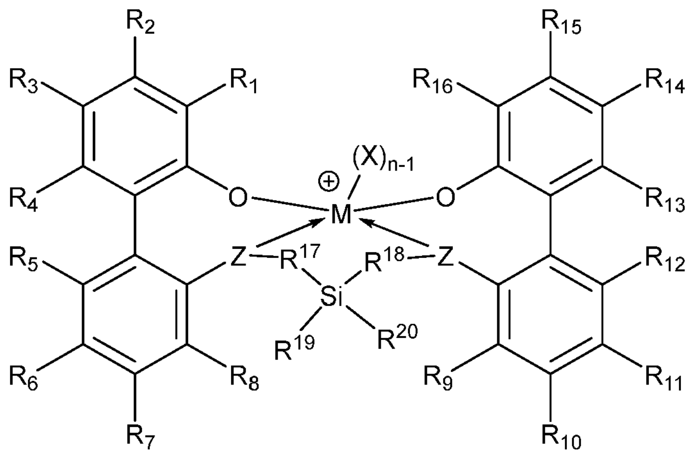

(Ia)

wherein:

$A^-$ is an anion;
M is titanium, zirconium, or hafnium;
subscript n of $(X)_n$ is 1, 2, or 3;
each X is a monodentate ligand independently chosen from unsaturated $(C_2\text{-}C_{50})$hydrocarbon, unsaturated $(C_2\text{-}C_{50})$heterohydrocarbon, $(C_1\text{-}C_{50})$hydrocarbyl, $(C_1\text{-}C_{50})$heterohydrocarbyl, $(C_6\text{-}C_{50})$aryl, $(C_4\text{-}C_{50})$heteroaryl, halogen, $-N(R^N)_2$, and $-N(R^N)COR^C$;
each Z is independently chosen from -O-, -S-, $(C_6\text{-}C_{50})$aryl, $(C_4\text{-}C_{50})$heteroaryl, $N(C_1\text{-}C_{40})$hydrocarbyl, and $P(C_1\text{-}C_{40})$hydrocarbyl;
$R^1$ and $R^{16}$ are independently chosen from $(C_6\text{-}C_{50})$aryl, $(C_4\text{-}C_{50})$heteroaryl, $(C_1\text{-}C_{40})$alkyl, $(C_3\text{-}C_{40})$heteroalkyl, radicals having formula (II), radicals having formula (III), and radicals having formula (IV):

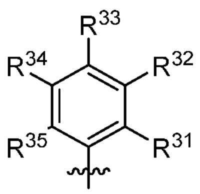 (II) 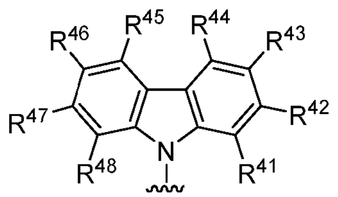 (III) 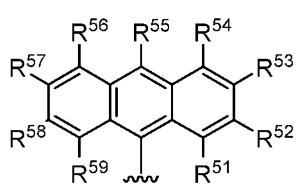 (IV)

wherein $R^{31\text{-}35}$, $R^{41\text{-}48}$, and $R^{51\text{-}59}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R^N)$-, $(R^C)_2NC(O)$-, or halogen;
$R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R)$-, $(R^C)_2NC(O)$-, and halogen;
$R^{17}$ and $R^{18}$ are independently chosen from $-(CR^C_2)_m$-, wherein subscript m is from 1 to 10;
$R^{19}$ and $R^{20}$ are independently chosen from linear or branched $(C_1\text{-}C_{20})$alkyl; and

each $R^C$, $R^P$, and $R^N$ are independently chosen from -H, $(C_1\text{-}C_{50})$hydrocarbyl, and $(C_1\text{-}C_{50})$heterohydrocarbyl.

17. The process of clause 16, wherein the catalyst system further comprises an activator.

18. The process of clause 17, wherein the activator comprises methylalumoxane (MAO).

19. The process of any of clauses 16-18, wherein the catalyst system is fed to the gas-phase polymerization reactor in neat form, as a solution, or as a slurry.

20. The process of any of clauses 16-19, wherein the catalyst system comprises spray-dried particles.

## Claims

**1.** A procatalyst comprising a metal-ligand complex disposed on one or more support materials, wherein the metal-ligand complex has a structure according to formula (I):

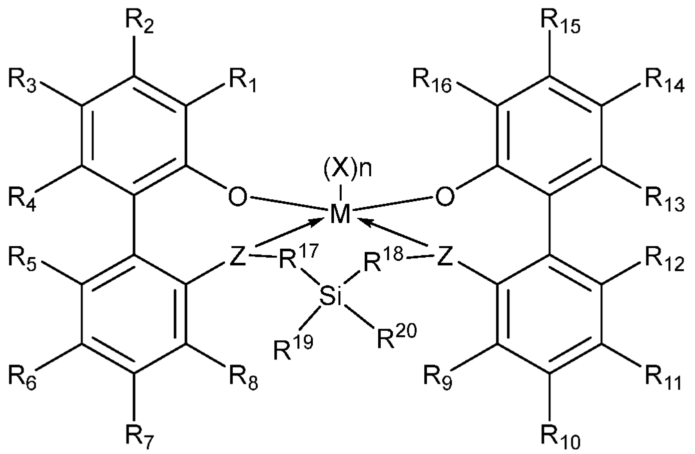

(I)

wherein:

M is titanium, zirconium, or hafnium;
n is 1, 2, or 3;
each X is a monodentate ligand independently chosen from unsaturated $(C_2\text{-}C_{50})$hydrocarbon, unsaturated $(C_2\text{-}C_{50})$heterohydrocarbon, $(C_1\text{-}C_{50})$hydrocarbyl, $(C_1\text{-}C_{50})$heterohydrocarbyl, $(C_6\text{-}C_{50})$aryl, $(C_4\text{-}C_{50})$heteroaryl, halogen, $-N(R^N)_2$, and $-N(R^N)COR^C$;
the metal-ligand complex is overall charge-neutral;
each Z is independently chosen from -O-, -S-, $(C_6\text{-}C_{50})$aryl, $(C_4\text{-}C_{50})$heteroaryl, $N(C_1\text{-}C_{50})$hydrocarbyl, and $P(C_1\text{-}C_{50})$hydrocarbyl;
$R^1$ and $R^{16}$ are independently chosen from $(C_6\text{-}C_{50})$aryl, $(C_4\text{-}C_{50})$heteroaryl, $(C_1\text{-}C_{50})$alkyl, $(C_3\text{-}C_{40})$heteroalkyl, radicals having formula (II), radicals having formula (III), and radicals having formula (IV):

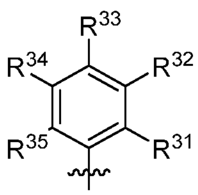
(II)
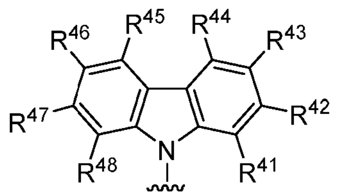
(III)
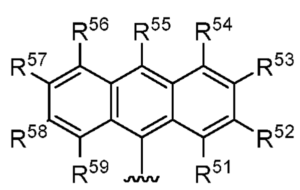
(IV)

wherein $R^{31\text{-}35}$, $R^{41\text{-}48}$, and $R^{51\text{-}59}$ are independently chosen from -H, $(C_1\text{-}C_{50})$hydrocarbyl, $(C_1\text{-}C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C{=}N$-, $R^CC(O)O$-, $R^COC(O)$-, $R^CC(O)N(R^N)$-, $(R^C)_2NC(O)$-, or halogen;
$R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1\text{-}C_{50})$hy-

drocarbyl, $(C_1-C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R)-$, $(R^C)_2NC(O)-$, and halogen;
$R^{17}$ and $R^{18}$ are independently chosen from $-(CR^C{}_2)_m-$ , wherein subscript m is from 1 to 10;
$R^{19}$ and $R^{20}$ are independently chosen from linear or branched $(C_1-C_{20})$alkyl; and
each $R^C$, $R^P$, and $R^N$ are independently chosen from -H, $(C_1-C_{50})$hydrocarbyl, and $(C_1-C_{50})$heterohydrocarbyl.

**2.** The procatalyst of claim 1, wherein $R^1$ and $R^{16}$ are the same.

**3.** The procatalyst of either claim 1 or 2, wherein at least one of $R^1$ and $R^{16}$ is a radical having formula (II) and at least one of $R^{32}$ and $R^{34}$ is *tert*-butyl.

**4.** The procatalyst of either claim 1 or 2, wherein at least one of $R^1$ and $R^{16}$ is a radical having formula (III).

**5.** The procatalyst of claim 4, wherein at least one of $R^{42}$, $R^{43}$, $R^{46}$, and $R^{47}$ is *tert*-butyl.

**6.** The procatalyst of claim 5, wherein $R^{41-48}$ are -H.

**7.** The procatalyst of any of claims 1-7, wherein the one or more support materials comprise fumed silica.

**8.** A catalyst system comprising the procatalyst of any of claims 1-6 and one or more activators.

**9.** The catalyst system of claim 7, wherein the activator comprises methylalumoxane (MAO).

**10.** A method for producing a catalyst system, the method comprising:

contacting one or more support materials, one or more activators, and a metal-ligand complex in an inert hydrocarbon solvent to produce the catalyst system, wherein the metal-ligand complex has a structure according to formula (Ia):

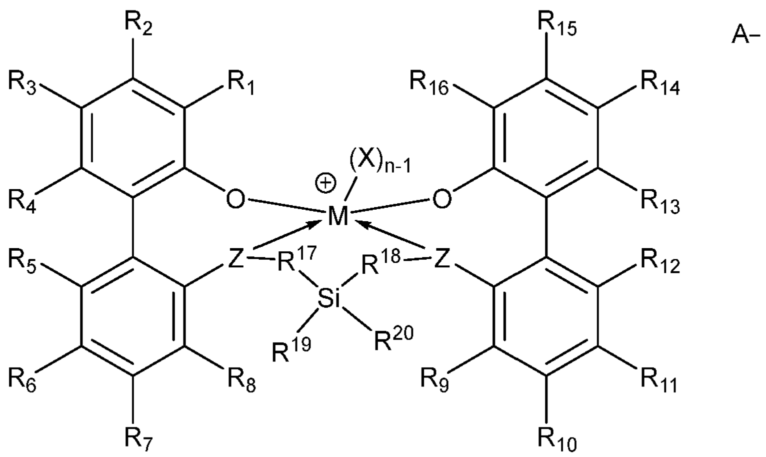

(Ia)

wherein:

$A^-$ is an anion;
M is titanium, zirconium, or hafnium;
n is 1, 2, or 3;
each X is a monodentate ligand independently chosen from unsaturated $(C_2-C_{50})$hydrocarbon, unsaturated $(C_2-C_{50})$heterohydrocarbon, $(C_1-C_{50})$hydrocarbyl, $(C_1-C_{50})$heterohydrocarbyl, $(C_6-C_{50})$aryl, $(C_4-C_{50})$heteroaryl, halogen, $-N(R^N)_2$, and $-N(R^N)COR^C$;
each Z is independently chosen from -O-, -S-, $(C_6-C_{50})$aryl, $(C_4-C_{50})$heteroaryl, $N(C_1-C_{40})$hydrocarbyl, and $P(C_1-C_{40})$hydrocarbyl;
$R^1$ and $R^{16}$ are independently chosen from $(C_6-C_{50})$aryl, $(C_4-C_{50})$heteroaryl, $(C_1-C_{40})$alkyl, $(C_3-C_{40})$heteroalkyl, radicals having formula (II), radicals having formula (III), and radicals having formula (IV):

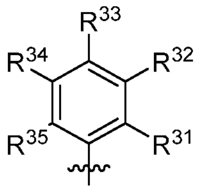 (II) 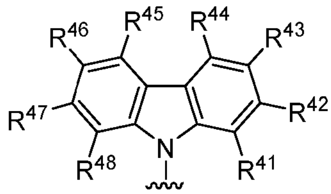 (III) 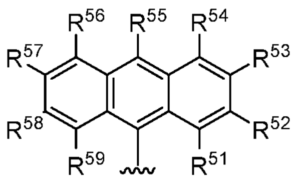 (IV)

wherein $R^{31-35}$, $R^{41-48}$, and $R^{51-59}$ are independently chosen from -H, $(C_1-C_{50})$hydrocarbyl, $(C_1-C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, or halogen;
$R^2$, $R^3$, $R^4$, $R^5$, $R^6$, $R^7$, $R^8$, $R^9$, $R^{10}$, $R^{11}$, $R^{12}$, $R^{13}$, $R^{14}$, and $R^{15}$ are independently chosen from -H, $(C_1-C_{50})$hydrocarbyl, $(C_1-C_{50})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R)-$, $(R^C)_2NC(O)-$, and halogen;
$R^{17}$ and $R^{18}$ are independently chosen from $-(CR^C_2)_m-$, wherein subscript m is from 1 to 10;
$R^{19}$ and $R^{20}$ are independently chosen from linear or branched $(C_1-C_{20})$alkyl; and
each $R^C$, $R^P$, and $R^N$ are independently chosen from -H, $(C_1-C_{50})$hydrocarbyl, and $(C_1-C_{50})$heterohydrocarbyl.

**11.** The method of claim 10, wherein the activator comprises methylalumoxane (MAO).

**12.** The method of either claim 10 or 11, wherein the method further comprises:

mixing the one or more support materials, the one or more activators, and the metal-ligand complex in the inert hydrocarbon solvent to produce a catalyst system precursor; and
drying the catalyst system precursor to produce the catalyst system.

**13.** The method of claim 12, wherein the catalyst system precursor is spray dried to produce the catalyst system; and the catalyst system comprises spray-dried particles.

**14.** The method of either claim 10 or 11, wherein the method further comprises:

disposing the one or more activators on the one or more support materials to produce a supported activator; and
contacting the supported activator with a solution of the metal-ligand complex in the inert hydrocarbon solvent.

**15.** The method of claim 14, wherein disposing the one or more activators on the one or more support materials comprises spray drying to produce a spray-dried supported activator.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63031638
- US 63143324
- US 4665208 A
- US 4952540 A
- US 5041584 A
- US 5091352 A
- US 5206199 A
- US 5204419 A
- US 4874734 A
- US 4924018 A
- US 4908463 A
- US 4968827 A
- US 5329032 A
- US 5248801 A
- US 5235081 A
- US 5157137 A
- US 5103031 A
- EP 0561476 A
- EP 0279586 A
- EP 0516476 A
- EP 0594218 A
- WO 9410180 A
- WO 1999060033 A
- US 5965477 A
- EP 0511665 A
- US 6034187 A
- EP 0767184 A
- WO 1999047598 A
- WO 1999048605 A
- US 5972510 A
- WO 1999050311 A
- US 5665818 A
- US 5677375 A
- US 6472484 B
- EP 0517868 A
- EP 0794200 A
- US 3709853 A
- US 4003712 A
- US 4011382 A
- US 4302566 A
- US 4543399 A
- US 4882400 A
- US 5352749 A
- US 5541270 A
- EP 0802202 A
- BE 839380
- WO 2018022975 A1
- US 9029487 B
- WO 2008033197 A2

### Non-patent literature cited in the description

- **LEE et al.** Toward absolute chemical composition distribution measurement of polyolefins by high-temperature liquid chromatography hyphenated with infrared absorbance and light scattering detectors. *ANAL. CHEM.,* 2014, vol. 86, 8649